(19) Europäisches Patentamt / European Patent Office / Office européen des brevets

(11) **EP 4 695 458 B1**

(12) **EUROPEAN PATENT SPECIFICATION**

(45) Date of publication and mention of the grant of the patent:
**05.08.2026 Bulletin 2026/32**

(21) Application number: **24743992.0**

(22) Date of filing: **28.06.2024**

(51) International Patent Classification (IPC):
**D04H 1/724** (2012.01)          **D04H 1/54** (2012.01)
**B32B 5/02** (2006.01)          **B32B 5/24** (2006.01)

(52) Cooperative Patent Classification (CPC):
**D04H 1/724; B32B 5/022; B32B 5/24; D04H 1/54;**
B32B 2262/0253

(86) International application number:
**PCT/US2024/036071**

(87) International publication number:
**WO 2025/006924 (02.01.2025 Gazette 2025/01)**

(54) **BREATHABLE SHEET WITH IMPROVED SURFACE ROBUSTNESS**

ATMUNGSAKTIVE FOLIE MIT VERBESSERTER OBERFLÄCHENROBUSTHEIT

FEUILLE RESPIRANTE PRÉSENTANT UNE ROBUSTESSE DE SURFACE AMÉLIORÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.06.2023 EP 23182658**

(43) Date of publication of application:
**18.02.2026 Bulletin 2026/08**

(73) Proprietor: **DuPont Safety & Construction, Inc.**
**Wilmington, DE 19805 (US)**

(72) Inventors:
• **VAN MEERVELD, Jan**
  **5326 Contern (LU)**
• **SAMANIEGO, Muriel**
  **63263 Neu-Isenburg (DE)**

(74) Representative: **Abitz & Partner**
**Postfach 86 01 09**
**81628 München (DE)**

(56) References cited:
WO-A1-2015/196217    US-A- 5 308 691
US-A- 6 034 008    US-A1- 2003 165 667
US-B2- 7 744 989

**Description**

**FIELD OF THE INVENTION**

The present invention relates to (i) a bonded sheet of nonwoven flash-spun plexifilamentary fibrils exhibiting a high degree of breathability and good surface robustness, (ii) a process for the preparation of a bonded sheet of nonwoven flash-spun plexifilamentary fibrils, and (iii) a multilayer sheet structure and an article comprising the bonded sheet of nonwoven flash-spun plexifilamentary fibrils.

**BACKGROUND**

Prior art fabrics for protective apparel are often a composite fabric wherein a microporous film or other water vapor permeable film is laminated to a nonwoven sheet. The microporous film provides the barrier properties to the composite fabric, especially barrier to liquid penetration, and the nonwoven sheet provides the strength of the composite fabric. While the use of a film provides a liquid impermeable barrier, the breathability of such films is insufficient to provide a comfortable protective garment. Composite fabrics constructed from a microporous film in combination with a nonwoven sheet provide a balance of breathability, barrier properties to liquids, and strength, but the property balance of prior art composite fabrics for protective apparel is often insufficient in one or more aspects. A particular weakness of some prior art composite fabrics for protective apparel is that the microporous film laminated to the surface of the nonwoven sheet is relatively thin and mechanically weak such that the composite fabric has insufficient surface robustness for use in more severe use environments.

Flash-spun nonwoven sheets, such as Tyvek® nonwoven sheets, have been developed with wide-ranging properties suitable for use in a variety of applications, including, but not limited to, protective apparel and medical wrap. Their production usually involves two stages, a first stage in which fibrils are produced and laid down in an overlapping manner to produce a fibril assembly in the form of a nonwoven sheet, and a second stage in which adjacent fibrils are bonded via thermal bonding to obtain a robust structure which cannot be easily disassembled. The properties of the final nonwoven sheet are impacted by various factors from the first and second stages.

Flash-spinning is a method for producing fibrils having a unique plexifilamentary structure. It involves preparing a solution of a fibril-forming polymer in a spin agent at a pressure above the vapor pressure of the spin agent and at a temperature above the normal boiling point of the spin agent, and releasing that solution into a zone of substantially lower temperature and pressure such that the spin agent flash evaporates and the polymer solidifies in the form of plexifilamentary fibrils. Examples of flash spinning processes are disclosed in US 3,081,519 and US 3,227,794.

The properties of flash-spun fibrils depend on, among other factors, the polymer or blend of polymers used to form them, the spin-agent used to produce the spin-fluid, the concentration of polymer in the spin-fluid, and the temperature of the spin-fluid during spinning. As with other types of spinning technology, the properties of an initial fibril assembly are modified by subsequent thermal bonding to produce a flash-spun nonwoven sheet.

Thermal bonding is a common process for bonding nonwoven sheets in which heat is used to soften the polymer from which the fibrils are made, typically, by passing the nonwoven sheet through an arrangement of heated rolls, with a back-up roll which forms a nip or without a back-up roll. The degree of bonding can vary based on the temperature and pressure, and time during which these are applied. Bonding of the nonwoven sheet also varies spatially depending on the rolls used and area to which the bonding is applied, e.g., using smooth surfaced rolls to apply uniform heat and pressure over the entire surface versus using patterned rolls to apply heat and pressure locally over only a portion of the surface to form an embossed pattern in the final nonwoven sheet.

US 3,442,740 and US 3,532,589 describe thermal bonding on a smooth heated roll where one or both sides of the nonwoven sheet are subjected to generally uniform, full surface contact thermal bonding. In this process, a surface bonded nonwoven sheet product is obtained having a paper-like feel and satisfying surface robustness which is suitable for uses such as packaging and print media but too stiff for use in garments, being uncomfortable and "noisy" for the wearer. Thermal bonding using a thermal calendar bonder, such as that described in US 5,972,147, also tends to produce a stiffer nonwoven sheet without the softness desired for most garment applications, such as protective apparel. The obtained nonwoven sheet product usually has a high degree of bonding and strength, but not necessarily sufficient surface robustness as fibrils can easily be pulled out of the surface.

US 3,478,141, and US 4,091,137 describe thermal bonding carried out by passing nonwoven sheets between heated engraved embossing rolls and rubber-coated back-up rolls to bond one or both sides of the nonwoven sheet only in defined areas, producing softer and more drapable materials suitable for use in garment applications. The embossing roll can contain different patterns, such as a point pattern as described in US 3,478,141, US 6,610,390, and US 2004/241399 A1, a rib pattern as described in US 2003/0032355 A1 and US 2003/00165667 A1, a linen pattern or a random pattern as described in US 7,744,989, or a combination of different patterns as described in US 5,620,779 and US 5,964,742. The nonwoven sheet may pass through one or multiple pairs of a heated embossing roll and a rubber-coated back-up roll and may also wrap partially around one or more heated embossing rolls to transfer heat into the nonwoven sheet prior to reaching the nip between any such embossing roll and a rubber-coated back-up roll. In addition, the nonwoven sheet may be in contact with one or more pre-heat or cooling rolls before and after passing through each pair of embossing and back-up rolls, in a configuration as described in US 5,972,147. US 6,034,008 and US 2003/00165667 A1 describe a process in which one side is embossed with a "rib" pattern of discrete bond points and the other side is embossed over a substantial portion of the surface with a "linen" pattern.

Thermal bonding impacts different properties of the nonwoven sheet in different ways.

The flux properties (breathability) of nonwoven sheets, i.e., the ability of the fibril assembly to allow free movement of air or other gases such as water vapor through it, either by diffusion or by bulk flow under a pressure difference, may be altered in different ways depending on the bonding process. Heating can lead to relaxation of tension within the fibrils and fibril shrinkage, resulting in an increase in the space between the fibrils and an increase in flux. Conversely, pressure applied during bonding can compress the structure, reducing the space between the fibrils through which gases can move, resulting in a decrease in flux. Moreover, if temperatures and pressures are high enough to cause fibrils to melt and fuse together extensively, this can create film-like regions which allow very little flux.

The barrier properties of nonwoven sheets, i.e., the ability of the fibril assembly to prevent particles in the air from passing through it, or liquids such as water to penetrate it under pressure, tend to change in the converse manner after bonding as, for instance, reduced pore sizes created by compression during bonding result in greater resistance to the passage of particles or liquids through the structure.

Mechanical properties such as delamination resistance, puncture and tear resistance, surface robustness, nail tear resistance, and tensile strength may increase or decrease, as the degree of bonding increases. However, the stronger connections between fibrils resulting from bonding, and the limitation of their ability to move relative to each other, increases the stiffness of the bonded nonwoven sheet and tends to negatively affect the flux properties of the bonded sheet.

To improve surface robustness of nonwoven sheets, a high degree of bonding of the nonwoven sheets is required (leading to higher sheet strength) so that fibrils at the surface are well bonded into the structure and can resist peel forces applied to the surface. It is expected that full surface bonding would be advantageous in this regard. However, the effect of bonding on sheet stiffness is especially notable when bonding is applied uniformly over the whole surface. This results in nonwoven sheets having a paper-like texture often referred to as "hard-structures" which tend to produce a lot of noise when flexed or bent, reducing the comfort for the wearer for garment applications. When a lower degree of bonding is applied by using embossed rolls to create areas having greater and lesser degrees of bonding, quieter and more flexible, softer, fabric-like structures can be achieved, often referred to as "softstructures." However, a lower degree of bonding may reduce the surface robustness and result in a low nail tear resistance.

These complex interactions of behaviors mean that thermally bonding a nonwoven sheet to produce a product for a particular application typically requires a compromise in the desired properties of the final nonwoven sheet.

It is possible to recover some softness in a bonded, nonwoven sheet, by applying processes known in the textile industry such as softening or re-lofting. In these processes, the nonwoven sheet is passed through equipment which locally distorts the material in a way that breaks or partially breaks some of the bonding between fibrils, allowing more relative motion and increasing the flexibility of the nonwoven sheet. These changes in mechanical properties are typically accompanied by an increase in flux properties and a loss in barrier properties.

US 3,408,709 describes a softening process using a button breaker to mechanically soften a nonwoven sheet. The button breaker employs knobbed rolls which turn at a different speed to, or even in the opposite direction to the movement of the nonwoven sheet as it travels over them, creating a rubbing effect.

US 5,966,785 and US 6,195,854 report a mechanical softening process where the nonwoven sheet is passed through the nip of a knobbed roll against a soft rubber backup roll. However, no information is given in these documents on how this process impacts the barrier properties of the nonwoven sheet.

US 7,296,328 discloses a process for the softening of a nonwoven sheet in which with increasing softening cycles, the sheet shows an increase in breathability. The described softening process employs a rubbing effect using a speed difference between the nonwoven sheet and the roller or mechanical object over which it passes. However, since the nonwoven sheet is exposed to a rubbing surface, its surface is damaged.

US 3,920,874 and US 3,811,979 describe a process employing pairs of rolls covered with square edged cylindrical pins which interlock for the softening of a nonwoven sheet passed between them, with the softening rollers moving at the same surface speed as the nonwoven sheet. The nonwoven sheet is required to have an elongation of at least 10% for the process to work correctly.

WO 2020/026062 A1 describes a process that includes a type of mechanical softening of a nonwoven sheet known as relofting. The term "relofting" denotes a post-processing step that increases the loft (i.e., lowers the solidity) of a bonded nonwoven sheet. The nonwoven sheets are made from melt spun or melt blown fibers and are potentially charged. According to the document, relofting reduces the pressure drop of a nonwoven sheet while having a negligible effect on its filtration efficiency when the nonwoven sheet has a solidity of below 8%, but when the nonwoven sheet has a solidity of 10 % or higher, relofting causes the filtration efficiency to decrease significantly. Therefore, the process described in this document is limited to open structures designed for filtration and cannot be used for structures having a high solidity that require good liquid barrier properties.

An ideal nonwoven sheet for use in protective apparel and medical wraps should have high flux to allow rapid exhaust of warm air and water vapor from within the protective apparel or medical wrap, and maintain a comfortable environment for the wearer, while having sufficient mechanical strength to withstand the rigors of physical work and a sufficient surface robustness. Surface robustness is particularly desirable, since nonwoven sheets in protective apparel may come in contact with rough or sticky surfaces which can pull on the nonwoven sheet and damage it, and medical wraps are often held closed using tapes which can pull fibrils out of the surface when they are peeled off.

It is also preferable that the nonwoven sheet has low stiffness and a soft texture so that it does not provide noticeable resistance to the wearer's movements. While flash-spun sheets have demonstrated a good variety of desired properties, there has been a trade-off required between the desired barrier, breathability, and mechanical properties. Therefore, there is a need for flash-spun sheets for use in protective apparel or medical wraps that provide improved surface robustness as well as breathability and comfort for the wearer, without sacrificing barrier properties and protection, or creating too much noise in use.

## SUMMARY OF THE INVENTION

In one embodiment, the invention is directed to a thermally bonded sheet of nonwoven flash-spun plexifilamentary fibrils, the sheet having

(a) a basis weight from 32 $g/m^2$ to 56 $g/m^2$,
(b) a having a total crystallinity index of 76% or less,
(c) a delamination strength from 0.15 N to 0.8 N,
(d) a surface robustness with a pass rate of at least 80%, and
(e) a handle-o-meter stiffness from 0.05 N to 1.0 N.

In a further embodiment of the invention, there is provided a process for the preparation of a sheet of nonwoven flash-spun plexifilamentary fibrils which comprises the steps of:

(i) generating a spin fluid comprising

(a) from 8.0 to 11.5 weight percent of a polymer, based on the total amount of the spin fluid, and
(b) a spin agent comprising a chlorine-containing solvent, selected from dichloromethane, cis-1,2-dichloroethylene, and trans-1,2-dichloroethylene, in combination with a fluorine-containing solvent,

(ii) flash spinning the spin fluid at a temperature at or above 205°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

In a still further embodiment, the invention is directed to a process for the preparation of a sheet of nonwoven flash-spun plexifilamentary fibrils which comprises the steps of:

(i) generating a spin fluid comprising

(a) from 14 to 19 weight percent of a polymer, based on the total amount of the spin fluid, and
(b) a spin agent comprising one or more hydrocarbons,

(ii) flash spinning the spin fluid at a temperature at or above 195°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and

(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

## BRIEF DESCRIPTION OF THE FIGURES

FIG. 1 shows an exemplary illustration of a "linen" pattern which can be used in bonding and embossing a sheet.
FIG. 2 shows the DSC curve of a sheet of an example which was bonded by embossing as described herein, and the DSC curve of a comparative sheet which had been subjected to full surface area bonding.

## DETAILED DESCRIPTION

### Definitions of Terms and Test methods

Before addressing details of embodiments, some terms and test methods are defined or clarified. Unless otherwise mentioned, all tests were carried out without pre-conditioning of the samples. When average values are indicated herein, this refers to the arithmetic average.

Basis weight is determined according to EN ISO 536 (1996) & EN 1849-2 (2009) using a sample size of 100 $cm^2$ and is reported in gram per square meter ($g/m^2$). The reported value represents an average of at least 12 individual measurements.

The crystallinity index is determined as follows. A diffractometer in reflection $\theta$-$2\theta$ Bragg-Brentano geometry (http://prism.mit.edu/xray/oldsite/Basics%20of%20X-Ray%20Powder%20Diffraction.pdf) is fitted with a Cu-$K_\alpha$ x-ray tube source with wavelength of 1.54 Å and a 1-dimensional detector. A parabolic mirror with a 1/16° fixed slit and 20mm mask is used to create a parallel incident x-ray beam while a fixed slit of 1/8°, Soller slits of 0.04 rad and a nickel Cu-$K_\beta$ filter are employed on the diffracted side before the detector. Each sample is 32 mm in diameter and is mounted onto low background, flat silicon wafer holders. The sample holder is mounted horizontally at the center of the diffractometer and normal to the scattering vector. During the measurement, the sample rotates in this plane.

The method used for the determination of the total crystallinity index is based on the ratio of the scattering intensity of the crystalline regions to the total intensity as described in S.L. Aggarwal, G.P. Tilley, Determination of crystallinity in polyethylene by X-Ray diffractometer, Journal of Polymer Science, Vol. 18, pp. 17-26, 1955. The analysis reported in this publication only considers the case in which the orthorhombic phase is present. Polyethylene can also crystallize in the monoclinic phase. In the current case, the procedure as described below is used to determine the crystallinity of the polyethylene samples using MATLAB. The scattering angle $2\theta$ of the orthorhombic and monoclinic peaks can vary by about +/- .15° due to instrumental differences, sample height/texture and material nature.

1. Data are shifted on the $2\theta$ axis such that the maximum intensity of the orthorhombic 110 peak occurs at 21.55°. Sample height variations can cause this shift in $2\theta$.

2. A local linear background, drawn from $2\theta$ = 13$\pm$0.5° to 28$\pm$0.5° in scattering angle, is subtracted.

3. The amorphous portion of the pattern is fitted using two Gaussian peaks which are required to touch the data points in the ranges of [15.0° to 18.65°], [22.65° to 22.75°], and [25.2° to 28°] $2\theta$ and which are centered around 18.1° and 21.6° $2\theta$, with peak full widths at half maximum (FWHM) of 4°-5° to give a total integrated intensity $I_{amorphous}$.

4. The total amorphous portion is then subtracted from the full pattern.

5. The remaining intensity is assumed to be crystalline in nature, belonging to the orthorhombic or monoclinic phases, and is fitted with the following peaks having respective integrated intensities:

1) Orthorhombic 110 peak: 21.55°, Pearson VII peak shape, $I_{110,O}$.
2) Orthorhombic 200 peak: 23.8°, Pearson VII peak shape, $I_{200,O}$.
3) Additional peak to fit asymmetry of the orthorhombic 110 peak: 21.0°, Pearson VII peak shape. $I_{110,A}$. The subscript "A" stands for asymmetric.
4) Monoclinic 010 peak: 19.5°, Pearson VII peak shape, $I_{010,M}$.
5) Monoclinic 200 peak: 23.1°, Pearson VII peak shape $I_{200,M}$.

Typical Peak FWHMs vary between 0.5° and 1°. Pearson VII M-values are allowed to vary from 1-100, but typically fall around 5 for each peak. If no monoclinic peak is visible at 19.5°, then both monoclinic peaks are set to zero intensity.

Peak positions and widths are allowed to vary slightly to obtain a good fit.

6. The total crystallinity index is calculated from the ratio of crystalline scattering to total scattering. The crystalline scattering is defined as the sum of the integrated intensities from the crystalline peaks (monoclinic and orthorhombic). The total scattering is defined as the sum of the integrated intensity of crystalline and amorphous peaks:

$$\text{crystallinity index}=CI= \frac{I_{110,O} + I_{200,O} + I_{110,A} + I_{010,M} + I_{200,M}}{I_{110,O} + I_{200,O} + I_{110,A} + I_{010,M} + I_{200,M} + I_{\text{amorphous}}}$$

Accordingly, the partial crystallinity indices $CI_{\text{orthorhombic}}$ and $CI_{\text{monoclinic}}$ are calculated respectively from these expressions

$$CI_{\text{orthorhombic}}= \frac{I_{110,O} + I_{200,O} + I_{110,A}}{I_{110,O} + I_{200,O} + I_{110,A} + I_{010,M} + I_{200,M} + I_{\text{amorphous}}}$$

$$CI_{\text{monoclinic}}= \frac{I_{010,M} + I_{200,M}}{I_{110,O} + I_{200,O} + I_{110,A} + I_{010,M} + I_{200,M} + I_{\text{amorphous}}}$$

Gurley Hill porosity (sometimes also referred to as "Gurley Porosity") is a measure of the permeability of the sheet for gaseous materials. In particular, it is a measure of how long it takes a volume of gas to pass through an area of the sheet wherein a certain pressure gradient exists. Gurley-Hill porosity is determined in accordance with TAPPI T-460 OM-88 (2006) using a Lorentzen & Wettre Model SE 166 or 516 from Lorentzen & Wettre, Kista, Sweden. This test method measures the time required for 100 cubic centimeters ($cm^3$) of air to be pushed through a 28.7 mm diameter sample having an area of 6.54 $cm^2$ (one square inch) under a pressure of approximately 1.21 kPa (4.9 inches) of water. The Gurley Hill porosity reported herein is expressed in seconds and represents an average of at least twelve individual measurements. The reported value represents an average of at least 12 individual measurements. The lower the Gurley Hill porosity, the greater the air permeability of the sheet.

Handle-o-meter stiffness is a measure of the resistance of a sample to being pressed into a 10mm slot by a blade attached to a 100g penetrator beam that is motor driven. It is measured by ASTM 6828 (2002) - Stiffness of Fabric by Blade/Slot Procedure and is expressed in gram-force (gf), convertible to N by multiplying gf by 9.8067 and dividing by 1000. A lower Handle-o-meter stiffness value refers to a softer sheet.

The hydrostatic head is a measure of the resistance of a sheet to penetration by liquid water under a static load. Herein the hydrostatic head is determined based on AATCC 127 (2018). The hydrostatic head is reported in cm of water column. The hydrostatic head is measured on a FX 3000 HydroTester III from TexTest AG, Schwerzenbach, Switzerland. Water in contact with one side of a 102.6 $cm^2$ section of a sample is pressurized at a rate of 60 +/- 3 $cmH_2O$/min until three areas of the sample are penetrated by the water. The reported hydrostatic head is the average of at least 6 individual measurements. A higher hydrostatic head value refers to a sheet having a higher resistance to water penetration, that is having a lower water permeability. For a laminated product, the surface of the sheet with the barrier function is the surface in contact with the water for measurement.

The moisture vapor transmission rate (MVTR) is measured according to EN ISO 12572 (2001), "Hygrothermal performance of building materials and products, Climate C", using a Gintronic Gravitest 6400 with an ES 420A balance from MRS Seitter, Lenning-Brück, Germany. The following settings are applied. The measurement is performed at 23°C with a relative humidity of 100% in the cups, and an air flow above the samples of test material of 2.5 m/s at a relative humidity of 50%, and using a measurement interval of 30 minutes. A method using multiple layers of the test material is used to eliminate the impacts of the air layer above the water in each cup and of the boundary layer above each sample of test material.

Five test cups are each filled with water to a height of 15 mm from the top. Two of the test cups are then closed using one layer of test material, one of the test cups is closed using two layers of test material, and the two remaining test cups are closed with three layers of test material. The test is then performed with the five test cups in the same instrument at the same time. The weights of the test cups are monitored until the rate of weight loss from each test cup stabilizes to within +/-5 % during 5 successive measurements. The rate of weight loss is then divided by the upper cross-sectional area of the test cup through which water vapor has diffused to give a water vapor transmission rate per cup (WDD in g/$m^2$/day), and the total resistance to the water vapor diffusion (Sd, in cm of equivalent air layer thickness) for each cup is calculated using the formula:

$$Sd = 2366/WDD$$

The Sd values for each cup are then plotted against the number of layers of test material used for that cup and the slope of a line through the points is determined by linear regression. This slope (SDML) represents the incremental increase in water vapor diffusion resistance created by adding one layer of test material. This is then converted back to a moisture vapor transmission rate for one layer of test material by performing the reverse calculation:

$$MVTR = 2366/SDML$$

The reported value is for one measurement, which inherently averages the property for ten individual samples of test material.

The Ret (resistance to evaporative heat loss through the sample) is a measure of the breathability of a fabric, with lower values corresponding to higher breathability. The Ret is measured according to EN 31092 / ISO 11092 and expressed in $m^2Pa/W$. The Hohenstein Comfort Rating System indicates that breathable fabrics have Ret values below 30 $m^2$ Pa/W, very breathable fabrics have Ret values below 13 $m^2Pa/W$, and extremely breathable fabrics have Ret values of below 6 $m^2Pa/W$.

Surface robustness as described herein is measured according to ASTM F2252M (2018) "Standard practice for evaluating ink or coating adhesion to flexible packaging materials using tape". The ASTM standard practice is designed to assess the extent to which the surface of a flexible packaging material is damaged by the application and removal of tape. In this case, no ink or coating is present, but the same approach is used to evaluate the bonding of the surface layers of fibrils to the underlaying nonwoven sheet. In the measurement method described herein, the surface of the sheet bonded by embossing using a linen pattern is tested. The following modifications to the standard practice are applied: i) specimens are tested without pre-conditioning, and ii) no cross-hatch or X-cuts are made in the specimens prior to testing.

The tape used for the test is DuPont™ Tyvek® Acrylic Tape 2060B available from DuPont. This tape has a width of 75mm and provides a peel force from a Tyvek® surface of about 25 N/25mm. After applying the tape to the specimen, the circular end of a 60 mm diameter cylindrical weight having a mass of 2 kg is positioned centrally on the portion of the tape which is adhered to the specimen and left in place for 1 minute to ensure uniform and intimate contact between the adhesive on the tape and the specimen. The weight is then removed before the peel test is performed.

A specimen is determined to have failed the peel test if any of the following defects appear in the area from which the tape was peeled:

- Any material from the surface of the specimen visible on the tape or any areas of the surface of the specimen which have become detached from the specimen, and that have a dimension greater than 5 mm as measured using a vernier caliper.
- Raised or loose fibres (fibrils) which remain partly attached to the specimen, which are visible, or which can be moved or disturbed by gentle pressure with tweezers, having a dimension of greater than 5 mm as measured using a vernier caliper.

Detection of smaller defects is facilitated by observing the specimen at a shallow angle and/or by passing a fingertip lightly over the surface to check for raised or mobile areas. Traces of adhesive transferred to the specimen from the tape are not considered as defects. A minimum of 12 specimens are tested and the percentage of specimens free of defects is reported. As an example, if 10 of 12 tested specimens are free of defects, the pass rate would be 83.3 %.

BET surface area is measured by the BET nitrogen absorption method of S. Brunauer, P. H. Emmett and E. Teller, J. Am. Chem. Soc., V. 60 p 309-319 (1938) based on 5 equidistant relative pressures between 0.1 to 0.25 and is reported as $m^2/g$. The samples measured have a total surface area above 2 $m^2$. BET surface area is measured using a Quantachrome model NOVA 3000e from Quantachrome GmbH, Odelzhausen, Germany. Performance of the equipment is verified by using a standard aluminum oxide sample (3P-SRF586) having a BET surface area of 5.86 +/- 0.23 $m^2/gram$ supplied by 3P Instruments GmbH & Co, Odelzhausen, Germany. Before measurement, the samples are dried for at least 2 hours at a temperature of 60°C under vacuum on equipment Degasser MasterPrep from Quantachrome GmbH, Odelzhausen, Germany. The BET surface area reported herein is based on 1 or 2 measurements.

The trapezoidal tear strength (also referred to as trapezoid tearing strength) is a measure of the tear resistance of a fabric. The trapezoidal tear strength is measured according to EN ISO 9073-4 (1997) and is expressed in newton (N). The average trapezoidal tear strength is reported as the average of the trapezoidal tear strength in the machine direction (MD) of the sheet and of the trapezoidal tear strength in the cross direction (XD) of the sheet. The reported trapezoidal tear in either direction is an average of at least 12 measurements. The trapezoidal tear strength of a sample tends to increase proportionally with basis weight. Thus, the trapezoidal tear strength can be normalized by dividing it by the actual basis weight.

The delamination strength is measured according to ASTM Standard D2724 (2007) - Standard Test Method for Bond Strength of Bonded, Fused, and Laminated Apparel Fabrics, using a sample width of 25.4 mm, using a gauge length of 60 mm between the jaws of the tensilometer, and a speed of 127 mm/min. The sample is delaminated over a distance of 140 mm and the reported delamination strength is the average of all measurement points between a distance of 12 mm to 128 mm. The reported delamination strength is reported in N (per 25.4 mm) and is an average of at least 12 measurements in the MD direction.

Melting temperature is determined by differential scanning calorimetry, following the guidance provided in ASTM D3418 (Standard Test Method for Transition Temperatures and Enthalpies of Fusion and Crystallization of Polymers by Differential Scanning Calorimetry) and ASTM Standard F2625 (Standard Test Method for Measurement of Enthalpy of Fusion, Percent Crystallinity and Melting Point of Ultra-High-Molecular weight polyethylene by means of differential scanning calorimetry). For polyethylene, heating and cooling is performed under inert gas at a rate of 10°C/minute, heating the sample first from room temperature to 210°C, then cooling the sample back to room temperature and subsequently heating the sample a second time to 210°C. The melting point reported herein is the peak temperature of the endotherm of the second heating cycle. For polypropylene the same procedure applies - where the maximum temperature is 230°C.

The melt flow rate is determined according to the method described in ISO 1133 (Plastics - Determination of the melt mass-flow rate (MFR) and the melt volume-flow rate (MVR) of thermoplastics). The melt flow rate for polyethylene is determined under condition "D" at a temperature of 190°C and using a mass of 2160 grams. The melt flow rates of other polyolefins are performed at different temperatures as specified in ISO 1133.

Density is determined according to the method described in ISO 1183 (Plastics - Methods for determining the density of non-cellular plastics).

The term "polymer" is intended to embrace, without limitation, homopolymers, copolymers (such as for example, block, graft, random, and alternating copolymers), terpolymers, etc., and blends and modifications thereof. Furthermore, unless otherwise specifically limited, the term "polymer" shall include all possible geometrical configurations of the material. These configurations include, but are not limited to, isotactic, syndiotactic, and random symmetries.

The term "polyethylene" is intended to embrace not only homopolymers of ethylene, but also copolymers and terpolymers wherein at least 85% of the recurring units are ethylene units. One useful polyethylene is high-density polyethylene which has a melting temperature from about 123°C to about 140°C, a density in the range of 0.94 to 0.98 grams per cubic centimeter, and a melt flow rate (ISO 1133 condition D, 190°C/2160 grams) of between 0.1 g/10min and 100 g/10min, preferably less than 4 g/10min.

The term "polypropylene" is intended to embrace not only homopolymers of propylene but also copolymers and terpolymers where at least 85% of the recurring units are propylene units. Furthermore, unless otherwise specifically limited, the term "polypropylene" shall include all possible geometrical configurations of the material. These configurations include, but are not limited to, isotactic, syndiotactic, and random symmetries.

The term "polymer type" refers to the chemical class into which the polymer falls, for example, polyethylene, polypropylene, etc.

The term "plexifilamentary" refers to a three-dimensional integral network or web of a multitude of thin, ribbon-like, fibrils of random length and a median fibril width of less than about 25 microns. In plexifilamentary structures, the fibrils are generally coextensively aligned with the longitudinal axis of the structure, and they intermittently unite and separate at irregular intervals in various places throughout the length, width, and thickness of the structure to form a continuous three-dimensional network or web.

The terms "spin agent" or "spin agent composition" refers to a composition comprising one or more solvents and any additives that are used to initially dissolve the polymer(s) to form the spin fluid. Suitable additives include stabilizers, such as antioxidants or acid scavengers.

The term "spin fluid" refers to a solution for spinning in a flash spinning process comprising a polymer and a spin agent. The solution may also include one or more additives.

The term "cloud point pressure" refers to the pressure at which, at constant temperature, a clear single phase spin fluid transitions from a clear solution to a cloudy, twophase dispersion. At the cloud point pressure, a clear spin fluid becomes turbid.

Atmospheric pressure means 101.325 kPa. Essentially atmospheric pressure means 101.325 kPa ± 5%.

As used herein, the singular forms "a," "an," and "the" include the plural, and reference to a particular numerical value includes at least that particular value, unless the context clearly dictates otherwise. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable.

**Bonded Sheet of Nonwoven Flash-spun Plexifilamentary Fibrils**

Provided herein is a thermally bonded sheet of nonwoven flash-spun plexifilamentary fibrils, the sheet having

(a) a basis weight from 32 g/m² to 56 g/m²,
(b) a having a total crystallinity index of 76% or less,

(c) a delamination strength from 0.15 N to 0.8 N,
(d) a surface robustness with a pass rate of at least 80%, and
(e) a handle-o-meter stiffness from 0.05 N to 1.0 N,

The thermally bonded sheet of low to moderate basis weight described herein exhibits a desired combination of high delamination strength, high surface robustness, and low to moderate stiffness.

In some embodiments, the bonded sheet has a basis weight from 32 $g/m^2$ to about 55 $g/m^2$, in other embodiments, the bonded sheet has a basis weight from about 48 $g/m^2$ to about 55 $g/m^2$, and in other embodiments, the bonded sheet has a basis weight from about 38 $g/m^2$ to about 49 $g/m^2$.

In some embodiments, the bonded sheet has a total crystallinity index of more than about 60% to 76%, in other embodiments, the bonded sheet has a total crystallinity index from about 62% to 76%, and in other embodiments, the bonded sheet has a total crystallinity index from about 65% to 76%.

In some embodiments, the bonded sheet has a delamination strength from about 0.20 N to about 0.75 N, in other embodiments, the bonded sheet has a delamination strength from about 0.25 N to about 0.75 N, in other embodiments, the bonded sheet has a delamination strength from about 0.3 N to about 0.7 N, in other embodiments, the bonded sheet has a delamination strength from about 0.4 N to about 0.7 N, and in other embodiments, the bonded sheet has a delamination strength from about 0.30 N to about 0.65 N. In other embodiments, the bonded sheet has a delamination strength from about 0.2 N to about 0.5 N, and in other embodiments, the bonded sheet has a delamination strength from about 0.2 N to about 0.4 N.

The bonded sheet has a surface robustness with a pass rate of at least 80%, in some embodiments, the bonded sheet has a surface robustness with a pass rate of at least about 85%, and in other embodiments, the bonded sheet has a surface robustness with a pass rate of at least about 90%. In some embodiments, the bonded sheet has a surface robustness with a pass rate of at least about 95%, and in other embodiments, the bonded sheet has a surface robustness with a pass rate from about 95% to about 100%.

The bonded sheet has a handle-o-meter stiffness from 0.05 N to 1.0 N, in some embodiments, the bonded sheet has a handle-o-meter stiffness from about 0.1 N to about 0.9 N, in other embodiments, the bonded sheet has a handle-o-meter stiffness from about 0.2 N to about 0.9 N, and in other embodiments, the bonded sheet has a handle-o-meter stiffness from about 0.3 N to about 0.7 N. In some embodiments the bonded sheet has a handle-o-meter stiffness from 0.05 to about 0.5 N.

In some embodiments, the bonded sheet has a moisture vapor transmission rate (MVTR) of about 3000 $g/m^2/day$ or more, in other embodiments, the bonded sheet has a MVTR of about 4000 $g/m^2/day$ or more, in other embodiments, the bonded sheet has a MVTR of 6000 $g/m^2/day$ or more, in other embodiments, the bonded sheet has a MVTR of about 9000 $g/m^2/day$ or more, and in other embodiments, the bonded sheet has a MVTR from about 4000 $g/m^2/day$ to about 20,000 $g/m^2/day$. In some embodiments, the bonded sheet has a MVTR from 6000 $g/m^2/day$ to about 20,000 $g/m^2/day$, in some embodiments, the bonded sheet has a MVTR from 6000 $g/m^2/day$ to 16,000 $g/m^2/day$, in some embodiments, the bonded sheet has a MVTR from about 7000 $g/m^2/day$ to 16,000 $g/m^2/day$, and in other embodiments, the bonded sheet has a MVTR from about 9000 $g/m^2/day$ to about 12,000 $g/m^2/day$. In some embodiments, the bonded sheet has a MVTR from 6000 $g/m^2/day$ to about 9000 $g/m^2/day$.

In some embodiments, the bonded sheet has a Ret of less than about 13 $m^2Pa/W$, in other embodiments, the bonded sheet has a Ret of less than about 6 $m^2Pa/W$, in other embodiments, the bonded sheet has a Ret from about 3 $m^2Pa/W$ to about 13 $m^2Pa/W$, and in other embodiments, the bonded sheet has a Ret from about 3 $m^2Pa/W$ to about 6 $m^2Pa/W$.

In some embodiments, the bonded sheet has a Gurley Hill porosity of less than 30 seconds, in other embodiments, the bonded sheet has a Gurley Hill porosity from 3 seconds to 30 seconds, and in other embodiments, the bonded sheet has a Gurley Hill porosity from 3 seconds to about 20 seconds.

In some embodiments, the bonded sheet has a hydrostatic head of about 120 $cmH_2O$ or above, in other embodiments, the bonded sheet has a hydrostatic head from about 130 $cmH_2O$ or above, and in other embodiments, the bonded sheet has a hydrostatic head from about 130 $cmH_2O$ to about 220 $cmH_2O$.

In some embodiments, the bonded sheet has a BET surface area from 2.5 $m^2/g$ to 8 $m^2/g$, in other embodiments, the bonded sheet has a BET surface area from about 3 $m^2/g$ to 8 $m^2/g$, and in other embodiments, the bonded sheet has a BET surface area from about 4 $m^2/g$ to 8 $m^2/g$.

In some embodiments, the bonded sheet has an average trapezoidal tear strength from about 10 N to about 40 N, in other embodiments, the bonded sheet has a trapezoidal tear strength from about 15 N to about 30 N, and in other embodiments, the bonded sheet has a trapezoidal tear strength from about 17 N to about 28 N.

In some embodiments, the flash-spun plexifilamentary fibrils of the bonded sheet are comprised of a polyolefin. In some embodiments, the polyolefin is selected from polyethylene (PE), polypropylene (PP), and blends/mixtures thereof. Particularly preferred polyolefins are polyethylene (PE), in particular high-density polyethylene (HDPE), and blends/mixtures of high-density polyethylene (HDPE) and low-density polyethylene (LDPE) or blends/mixtures of high-density polyethylene (HDPE) and linear low-density polyethylene (LLDPE). In some embodiments, the polyolefin comprises at least 80 weight percent of high-density polyethylene (HDPE), based on the total amount of polymer. In other embodiments, the polyolefin comprises at least 90 weight percent of high-density polyethylene (HDPE), based on the total amount of polymer, and in other embodiments, the polyolefin comprises at least 95 weight percent of high-density polyethylene (HDPE), based on the total amount of polymer.

In some embodiments, the flash-spun plexifilamentary fibrils of the bonded sheet are comprised of a high-density polyethylene, and the sheet has a basis weight from 32 g/m$^2$ to about 55 g/m$^2$, a total crystallinity index from about 62% to 76%, a delamination strength from about 0.2 N to about 0.7 N, a surface robustness with a pass rate of at least about 85%, and a handle-o-meter stiffness from about 0.1 N to about 0.8 N.

In some embodiments, the flash-spun plexifilamentary fibrils of the bonded sheet are comprised of a high-density polyethylene, and the sheet has a basis weight from 32 g/m$^2$ to about 55 g/m$^2$, a total crystallinity index from about 62% to 76%, a delamination strength from about 0.2 N to about 0.7 N, a surface robustness with a pass rate of at least about 85 %, a handle-o-meter stiffness from about 0.1 N to about 0.8 N, and a Gurley Hill porosity from 3 seconds to 30 seconds.

In some embodiments, the flash-spun plexifilamentary fibrils of the bonded sheet are comprised of a high-density polyethylene, and the sheet has a basis weight from 32 g/m$^2$ to about 55 g/m$^2$, a total crystallinity index from about 62% to 76%, a delamination strength from about 0.2 N to about 0.7 N, a surface robustness with a pass rate of at least about 85 %, a handle-o-meter stiffness from about 0.1 N to about 0.8 N, and a moisture vapor transmission rate from 6000 g/m$^2$/day to 16,000 g/m$^2$/day.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.2 N to about 0.7 N, a surface robustness with a pass rate of at least about 85%, and a handle-o-meter stiffness from about 0.1 N to about 0.5 N.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.2 N to about 0.7 N, a surface robustness with a pass rate of at least about 85 %, a handle-o-meter stiffness from about 0.1 N to about 0.5 N, and a Gurley Hill porosity from 3 seconds to 30 seconds.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.2 N to about 0.7 N, a surface robustness with a pass rate of at least about 85 %, a handle-o-meter stiffness from about 0.1 N to about 0.5 N, and a moisture vapor transmission rate from about 8000 g/m$^2$/day to 16,000 g/m$^2$/day.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.2 N to about 0.7 N, a surface robustness with a pass rate of at least about 85 %, a handle-o-meter stiffness from about 0.1 N to about 0.5 N, and a Ret from about 3 m$^2$Pa/W to about 6 m$^2$Pa/W.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.4 N to about 0.7 N, a surface robustness with a pass rate of at least about 85 %, a handle-o-meter stiffness from about 0.1 N to about 0.5 N, and a Gurley Hill porosity from 3 seconds to 30 seconds.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.4 N to about 0.7 N, a surface robustness with a pass rate of at least about 85 %, a handle-o-meter stiffness from about 0.1 N to about 0.5 N, and a moisture vapor transmission rate from about 8000 g/m$^2$/day to 16,000 g/m$^2$/day.

In some embodiments, the flash-spun plexifilamentary fibrils of the bonded sheet are comprised of a high-density polyethylene, and the sheet has a basis weight from 32 g/m$^2$ to about 49 g/m$^2$, a total crystallinity index from about 62% to 76%, a delamination strength from about 0.4 N to about 0.7 N, a surface robustness with a pass rate of at least about 85 %, a handle-o-meter stiffness from about 0.1 N to about 0.5 N, and a Ret from about 3 m$^2$Pa/W to about 6 m$^2$Pa/W.

In some embodiments, the flash-spun plexifilamentary fibrils of the bonded sheet are comprised of a high-density polyethylene, and the sheet has a basis weight from about 49 g/m$^2$ to about 55 g/m$^2$, a total crystallinity index from about 62% to 76%, a delamination strength from about 0.3 N to about 0.7 N, a surface robustness with a pass rate of at least about 85 %, a handle-o-meter stiffness from about 0.1 N to about 0.5 N, and a Gurley Hill porosity from 3 seconds to 30 seconds.

In some embodiments, the flash-spun plexifilamentary fibrils of the bonded sheet are comprised of a high-density polyethylene, and the sheet has a basis weight from about 49 g/m$^2$ to about 55 g/m$^2$, a total crystallinity index from about 62% to 76%, a delamination strength from about 0.3 N to about 0.7 N, a surface robustness with a pass rate of at least about 85 %, a handle-o-meter stiffness from about 0.1 N to about 0.5 N, and a moisture vapor transmission rate from 6000 g/m$^2$/day to about 9,000 g/m$^2$/day,

In some embodiments, the flash-spun plexifilamentary fibrils of the bonded sheet are comprised of a high-density polyethylene, and the sheet has a basis weight from about 49 g/m$^2$ to about 55 g/m$^2$, a total crystallinity index from about 62% to 76%, a delamination strength from about 0.3 N to about 0.7 N, a surface robustness with a pass rate of at least about 85 %, a handle-o-meter stiffness from about 0.1 N to about 0.5 N, and a Ret from about 9 m$^2$Pa/W to about 6 m$^2$Pa/W.

Applicant has found that the bonded sheets according to the invention surprisingly have a very good balance of barrier properties, breathability, surface robustness, and delamination strength, which makes them very useful for use in garments, including, but not limited to, protective apparel such as full body protective clothing and partial body protective clothing (including, but not limited to, gowns, overalls, coveralls, trousers, coats, sleeves, hoods, shoe protectors, aprons, etc.), and also in medical wrap applications, as well as in further applications.

**Preparation of Bonded Sheet of Nonwoven Flash-spun Plexifilamentary Fibrils of Polymer**

In a further embodiment, there is provided a process for the preparation of a sheet of nonwoven flash-spun plexifilamentary fibrils which comprises the steps of:

(i) generating a spin fluid comprising

(a) from 8.0 to 11.5 weight percent of a polymer, based on the total amount of the spin fluid, and
(b) a spin agent comprising a chlorine-containing solvent, selected from dichloromethane, cis-1,2-dichloroethylene, and trans-1,2-dichloroethylene, in combination with a fluorine-containing solvent,

(ii) flash spinning the spin fluid at a temperature at or above 205°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

In a still further embodiment, the invention is directed to a process for the preparation of a sheet of nonwoven flash-spun plexifilamentary fibrils which comprises the steps of:

(i) generating a spin fluid comprising

(a) from 14 to 19 weight percent of a polymer, based on the total amount of the spin fluid, and
(b) a spin agent comprising one or more hydrocarbons,

(ii) flash spinning the spin fluid at a temperature at or above 195°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

**Flash-Spinning, Collecting, and Consolidating**

Flash-spinning is a method for producing fibrils having a unique plexifilamentary structure. It involves preparing a solution of a fibril-forming polymer in a spin agent (the spin fluid) at a pressure above the vapor pressure of the spin agent and at a temperature above the normal boiling point of the spin agent, and releasing that spin fluid into a zone of substantially lower temperature and pressure such that the spin agent flash evaporates and the polymer solidifies in the form of plexifilamentary fibrils. Suitable flash spinning processes and equipment which can be used herein are described in US 3,081,519, US 3,227,794, US 3,860,369, and US 7,744,989.

The formed plexifilamentary fibrils of polymer are discharged from each spin orifice, and the shape of these plexifilamentary fibrils of polymer may be modified by any methods known in the art. In some embodiments, the plexifilamentary fibrils of polymer discharged from each spin orifice may be modified by passing into a shroud such as described on US 3,387,326, in other embodiments by passing into a slotted outlet such as described in US 3,467,744 or US 5,788,993, and in other embodiments by passing into a slot fan jet as described in US 8,114,325. In some embodiments, streams of fibrils from multiple orifices may exit via a common slot as described in US 3,564,088.

Sheets comprising plexifilamentary fibrils of polymer can be formed by any method known in the art. In some embodiments, the stream of fibrils discharged from each spin orifice is directed towards a deflector device which alternately directs the stream of fibrils to the left and right onto a moving collecting device such that the fibrils accumulate in the form of a sheet, formed from fibrils oriented in an overlapping, multi-directional configuration. Deflection of the stream of fibrils may be achieved by any suitable means known in the art, including, but not limited to, those described in US 3,277,526 and US 3,387,326, US 3,169,899, US 3,497,918, US 3,593,074, US 3,851,023, US 3,860,369, US 4,148,595, US 5,045,258, US 5,643,524, US 5,731,011, US 5,750,152 and WO 92/20511 A1. The stream of fibrils may also be laid down to form a sheet without deflection as described in US 5,788,993 and US 8,114,325. The method of forming a sheet may further utilize structures in the spincell such as those described in US 5,123,983, US 5,296,172, and WO 92/20511 A1.

In some embodiments, the streams of fibrils are discharged from spin orifices located on a rotating support, and the fibrils are collected on a collecting belt which surrounds the rotating arrangement circumferentially as described in US 7,118,698, US 7,621,731, US 7,786,034, and US 7,998,388.

The sheet formed by flash-spinning as described herein may be consolidated by applying a small amount of pressure to the sheet. In some embodiments, the sheet may be passed under a roller which applies pressure to the sheet to form a lightly consolidated sheet.

A broad range of different polymers and blends/mixtures thereof can be used in the process described herein. In some embodiments, the polymer is selected from polyolefins. In some embodiments, polyolefins are polyethylene (PE), polypropylene (PP), and blends/mixtures thereof. Particularly preferred polyolefins are polyethylene (PE), in particular high-density polyethylene (HDPE), and blends/mixtures of high-density polyethylene (HDPE) and low-density polyethylene (LDPE), and blends/mixtures of high-density polyethylene (HDPE) and linear low-density polyethylene (LLDPE). In some embodiments, the polyolefin comprises at least 80 weight percent of high-density polyethylene (HDPE), based on the total amount of polymer. In other embodiments, the polyolefin comprises at least 90 weight percent of high-density polyethylene (HDPE), based on the total amount of polymer, and in other embodiments, the polyolefin comprises at least 95 weight percent of high-density polyethylene (HDPE), based on the total amount of polymer.

## Process with one or more hydrocarbons as spin agent

The spin agent may include one or more hydrocarbons. In some embodiments, the spin fluid comprises the polymer in an amount from 14.0 to 19.0 weight percent based on the total amount of the spin fluid, in other embodiments, the spin fluid comprises the polymer in an amount from 14.0 to about 18.0 weight percent, based on the total amount of the spin fluid, and in other embodiments, the spin fluid comprises the polymer in an amount from 14.0 to about 17.0 weight percent, based on the total amount of the spin fluid.

In some embodiments, the spin fluid comprises the spin agent in an amount from about 81.0 to about 86.0 weight percent, based on the total amount of the spin fluid, in other embodiments, the spin fluid comprises the spin agent in an amount from about 82.0 to about 86.0 weight percent, based on the total amount of the spin fluid, and in other embodiments, the spin fluid comprises the spin agent in an amount from about 83.0 to about 86.0 weight percent, based on the total amount of the spin fluid.

In some embodiments, the flash-spinning is performed at a temperature above 195°C, and in other embodiments, from 195°C to 210°C, and in other embodiments, from 195°C to about 205°C.

In some embodiments, the spin agent comprises one or more hydrocarbons. In some embodiments, the one or more hydrocarbons of the spin agent are selected from n-pentane, cyclopentane, hexane, cyclohexane, 2,2-dimethylbutane, n-butane or mixtures thereof. In some embodiments, the spin agent comprises n-pentane or cyclopentane or a mixture thereof. In some embodiments, the spin agent consists essentially of n-pentane. In some embodiments, the spin agent consists essentially of a mixture of n-pentane and cyclopentane, in other embodiments, the spin agent consists essentially from about 60 to about 85 weight percent n-pentane and from about 15 to about 40 weight percent cyclopentane, in other embodiments from about 65 to about 80 weight percent n-pentane and from about 20 to about 35 weight percent cyclopentane, and in other embodiments from about 70 to about 80 weight percent n-pentane and from about 20 to about 30 weight percent cyclopentane. In some embodiments, the spin agent comprises or consists essentially of a mixture of n-pentane, cyclopentane, and 2,2-dimethylbutane. In other embodiments, the spin agent consists essentially from about 60 to about 85 weight percent n-pentane, from about 13 to about 33 weight percent cyclopentane, and from about 2 to about 7 weight percent 2,2-dimethylbutane.

In some embodiments, the spin agent consists of n-pentane. In some embodiments, the spin agent consists of a mixture of n-pentane and cyclopentane, in other embodiments, the spin agent consists from about 60 to about 85 weight percent n-pentane and from about 15 to about 40 weight percent cyclopentane, in other embodiments from about 65 to about 80 weight percent n-pentane and from about 20 to about 35 weight percent cyclopentane, and in other embodiments from about 70 to about 80 weight percent n-pentane and from about 20 to about 30 weight percent cyclopentane. In some embodiments, the spin agent consists of a mixture of n-pentane, cyclopentane, and 2,2-dimethylbutane. In other embodiments, the spin agent consists from about 60 to about 85 weight percent n-pentane, from about 13 to about 33 weight percent cyclopentane, and from about 2 to about 7 weight percent 2,2-dimethylbutane.

The spin fluid may include additives, such as antioxidants or acid scavengers in minor amounts. In some embodiments, the spin fluid comprises additives in an amount of about 1.5 weight percent or less, based on the total amount of the spin fluid, and in other embodiments in an amount of about 0.1 weight percent or less, based on the total amount of the spin fluid.

In some embodiments, the plexifilamentary fibrils are spun at a spin temperature from 195°C to about 210°C using a spin fluid comprising 14.0 to 19.0 weight percent polymer, based on the total amount of the spin fluid, and comprising a spin agent which comprises, consists essentially of, or consists of a mixture of n-pentane and cyclopentane. In other embodiments, the plexifilamentary fibrils are spun at a spin temperature from 195°C to about 205°C using a spin fluid comprising 14.0 to 19.0 weight percent polymer, based on the total amount of the spin fluid, and comprising a spin agent which comprises, consists essentially of, or consists of n-pentane and cyclopentane.

In some embodiments, the plexifilamentary fibrils are spun at a spin temperature from 195°C to about 210°C using a spin fluid comprising 14.0 to 19.0 weight percent polymer, based on the total amount of the spin fluid, and comprising a spin agent which comprises, consists essentially of, or consists of a of a mixture of n-pentane, cyclopentane and 2,2-dimethylbutane. In other embodiments, the spin agent consists from about 60 to about 85 weight percent n-pentane, from about 13 to about 33 weight percent cyclopentane, and from about 2 to about 7 weight percent 2,2-dimethylbutane.

## Process with the mixture of chlorine- and fluorine-containing solvents

The spin agent may include a chlorine-containing solvent, selected from dichloromethane, cis-1,2-dichloroethylene and trans-1,2-dichloroethylene, in combination with a fluorine-containing solvent. In this case the spin fluid comprises the polymer in an amount from 8.0 to 11.5 weight percent, based on the total amount of the spin fluid, in other embodiments, the spin fluid comprises the polymer in an amount from 8.5 to about 11.0 weight percent, based on the total amount of the spin fluid, and in other embodiments, the spin fluid comprises the polymer in an amount from about 9.0 to about 11.0 weight percent, based on the total amount of the spin fluid.

In some embodiments, the spin fluid comprises the spin agent in an amount from about 88.5 to about 92.0 weight percent, based on the total amount of the spin fluid, in other embodiments, the spin fluid comprises the spin agent in an amount from about 89.0 to about 91.5 weight percent, based on the total amount of the spin fluid, and in other embodiments, the spin fluid comprises the spin agent in an amount from about 89.0 to about 91.0 weight percent, based on the total amount of the spin fluid.

In some embodiments, the flash-spinning is performed at a temperature from 205°C to about 230°C, in other embodiments, from 205°C to 220°C, and in other embodiments, from about 210°C to about 220°C.

In some embodiments, the spin agent comprises a chlorine-containing solvent, selected from dichloromethane, cis-1,2-dichloroethylene and trans-1,2-dichloroethylene, in combination with a fluorine-containing solvent. In some embodiments, the spin agent comprises a chlorine-containing solvent, selected from dichloromethane, cis-1,2-dichloroethylene and trans-1,2-dichloroethylene, in combination with a fluorine-containing solvent which is a hydrofluorocarbon having three to six carbon atoms, a perfluorocarbon having three to six carbon atoms, or a hydrofluoroether. In some embodiments, the perfluorocarbons or hydrofluorocarbons having three to six carbon atoms of the spin agent are perfluoropentane, perfluorohexane, 1,1,1,3,3-pentafluorobutane, 1H,4H-perfluorobutane, 2H,3H-decafluoropentane, 1H,6H-perfluorohexane, or 1H-perfluorohexane.

In some embodiments, the spin agent consists essentially of a mixture of dichloromethane and 2H,3H-decafluoropentane, 1H,4H-perfluorobutane, 1H,6H-perfluorohexane, 1H-perfluorohexane, perfluoropentane, perfluorohexane and 1,1,1,3,3-pentafluorobutane, in other embodiments, the spin agent consists essentially from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane, and in other embodiments, from about 75 to about 85 weight percent dichloromethane and from about 15 to about 25 weight percent 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

In some embodiments, the spin agent consists of a mixture of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, in other embodiments, the spin agent consists from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane, and in other embodiments, from about 75 to about 85 weight percent dichloromethane and from about 15 to about 25 weight percent of 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

The spin fluid may include additives, such as antioxidants or acid scavengers in minor amounts. In some embodiments, the spin fluid comprises additives in an amount of about 1.5 weight percent or less of the total amount of the spin fluid, and in other embodiments in an amount of about 0.1 weight percent or less of the total amount of the spin fluid.

In some embodiments, the plexifilamentary fibrils are spun at a spin temperature from about 205°C to about 230°C using a spin fluid comprising about 8.0 to about 11.5 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane. In other embodiments, the plexifilamentary fibrils are spun at a spin temperature from 205°C to about 220°C using a spin fluid comprising 8.5 to about 11 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane. In other embodiments, the plexifilamentary fibrils are spun at a spin temperature from 205°C to about 220°C using a spin fluid comprising about 9.0 to about 11.0 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

## Thermal Bonding By Embossing

After the sheet is formed into a consolidated sheet as described herein, the consolidated sheet is then subjected to thermal bonding via embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll. The static pressure in the nip of the embosser is between 150 kPa and 900 kPa and the pressure is applied for 10 ms to 20 ms.

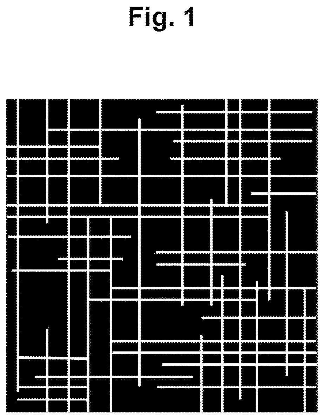

The embossing roll(s) apply heat and pressure locally over a portion of the surface of the consolidated sheet to bond the consolidated sheet and form an embossed pattern. An exemplary linen pattern is illustrated in FIG 1. The degree of bonding can vary by adjusting the nip pressure, temperature, and length of time during which these are applied. Applicant has found that if the nip pressure is applied for a short time, a partial bonding of the surface can be obtained which provides a beneficial combination of breathability, high surface robustness, and softness. This is unexpected as with less bonding, a weak surface robustness and breathability would have been expected.

As described herein, the consolidated sheet is embossed on at least one side by passing it through a nip of two rolls of an embosser comprising an embossing roll engraved with a linen pattern and a rubber coated back-up roll. An "embosser" as used herein means a pair of two rolls forming a nip, one being a heated embossing roll and the other being a rubber coated back-up roll. The embosser as described herein comprising an embossing roll engraved with a linen pattern may also be referred to as embosser 1.

The static pressure in the nip of the embosser 1 (nip pressure) is between 150 kPa and 900 kPa. In some embodiments, the static pressure in the nip of the embosser is between 150 kPa and about 550 kPa, and in other embodiments, the static pressure in the nip of the embosser is between 150 kPa and about 400 kPa.

The static pressure in the nip of the embosser 1 is applied for 10 ms to 20 ms. In some embodiments, the static pressure in the nip of the embosser is applied for 10 ms to about 18 ms, in other embodiments, the static pressure in the nip of the embosser is applied for about 11 ms to about 18 ms, and in other embodiments, the static pressure in the nip of the embosser is applied for about 11 ms to about 15 ms.

In some embodiments, the embossing roll has a temperature from about 135°C to about 210°C during bonding, in other embodiments, the embossing roll has a temperature from about 140°C to about 155°C during bonding.

In some embodiments, the consolidated sheet wraps the heated embossing roll such that the angle between the direction of entry and the direction of exit (the wrap angle) is from about 20° to about 140°, in other embodiments, the wrap angle is from about 20° to about 100°, and in other embodiments, the wrap angle is from about 20° to about 60°.

In some embodiments, the ratio of the time for a wrap of the consolidated sheet on the heated embossing roll of embosser 1 to the time of the consolidated sheet in the nip of embosser 1 is from about 4 to about 20, in some embodiments, from about 4 to about 15, and in other embodiments, from about 4 to about 12. The time for a wrap of the consolidated sheet on the heated embossing roll of embosser 1 as understood herein starts when the consolidated sheet touches the heated embossing roll and ends when the sheet leaves the embossing roll into the nip of the embosser.

The static nip pressure can be varied with the embossing roll configuration, the backup-roll diameter, rubber hardness, and thickness.

In some embodiments, the rubber coated back-up roll is coated with a rubber with a Shore A hardness of 50 to 70.

The embossing roll may be any suitable material known in the art. In some embodiments, the embossing roll is metal. The embossing roll of embosser 1 is engraved with a linen pattern. Embossing rolls engraved with a linen pattern are known in the art. An exemplary illustration of a linen pattern is shown in FIG. 1.

In some embodiments, about 50% to about 85% of the area of one side of the consolidated sheet is embossed using a linen pattern, in some embodiments, about 50% to about 75% of the area of one side of the consolidated sheet is embossed using a linen pattern, and in other embodiments, about 55% to about 75% of the area of one side of the consolidated sheet is embossed using a linen pattern.

In some embodiments, the static pressure in the nip of the embosser is between 150 kPa and 400 kPa and the rubber coated back-up roll is coated with a rubber with a Shore A hardness of 50, in other embodiments, the static pressure in the nip of the embosser is between 250 kPa and 650 kPa and the rubber coated back-up roll is coated with a rubber with a Shore A hardness of 60, and in other embodiments, the static pressure in the nip of the embosser is between 300 kPa and 900 kPa and the rubber coated back-up roll is coated with a rubber with a Shore A hardness of 70.

In some embodiments, the consolidated sheet may first transfer over a pre-heat roll before being transferred to embosser 1. In some embodiments, the temperature of the pre-heat rolls may be varied from 50°C to 30°C below the melting peak temperature of the polymer

At least one side of the consolidated sheet is embossed using a linen pattern as described herein with embosser 1. In some embodiments, the consolidated sheet is embossed on both sides. The embosser used for embossing the other side may also be referred to as embosser 2. In some embodiments, the consolidated sheet is embossed first with embosser 1 on one side and then with embosser 2 on the other side. In other embodiments, the consolidated sheet is embossed first with embosser 2 on one side and then with embosser 1 on the other side.

In some embodiments, the other side of the consolidated sheet is embossed using a linen pattern. In other embodiments, the consolidated sheet is embossed on the other side using a point pattern, and in other embodiments, the consolidated sheet is embossed on the other side using a rib pattern. In some embodiments, the consolidated sheet is embossed on the other side using a random pattern.

In some embodiments, about 6% to about 85% of the area of the other side of the consolidated sheet is embossed with embosser 2. In some embodiments, from about 10% to about 60% of the area of the other side of the consolidated sheet is embossed, or from about 15% to about 60% or from about 20% to about 60% or from about 26% to about 60% from about 30% to about 60%. In other embodiments, from about 50% to about 85% of the area of the other side of the consolidated sheet is embossed.

In some embodiments, about 50% to about 85% of the area of one side of the consolidated sheet is embossed using a linen pattern, and about 10% to about 60% or 15% to about 60% or about 20% to about 60% or about 26% to about 60% of the area of the other side of the consolidated sheet is embossed with embosser 2 using a rib pattern, a point pattern, or a random pattern.

The static nip pressure of embosser 2 can be varied with embossing roll configuration and engraving patterns, backup roll diameter, rubber hardness and thickness.

In one embodiment, the sheet is embossed by passing through a nip of two rolls, one being an embossing roll engraved with a linen pattern and the other a back-up roll with a Shore A hardness of 50 to 70.

The embossing roll of embosser 2 may be any suitable material known in the art. In some embodiments, the embossing roll is metal. The embossing roll of embosser 2 are engraved with a pattern including, but not limited to, a linen pattern as described in US 7,744,989, a point pattern as described in US 3,478,141, US 6,610,390, and US 2004/241399 A1, a rib pattern as described in US 2003/0032355 A1 and US 2003/0165667 A1, or a random pattern as described in US 7,744,989.

In some embodiments, each embossing roll has a temperature from about 135°C to about 210°C during bonding, in other embodiments, each embossing roll has a temperature from about 140°C to about 155°C during bonding.

In some embodiments, the consolidated sheet wraps the heated embossing roll of embosser 2 such that the angle between the direction of entry and the direction of exit (the wrap angle) is from about 10° to about 140°, in other embodiments, the wrap angle is from about 10° to about 100°, and in other embodiments, the wrap angle is from about 10° to about 60°.

In some embodiments, the consolidated sheet may be in contact with pre-heat rolls before thermally bonding and/or may be in contact with cooling rolls after thermally bonding, in a configuration as described in US 5,972,147. In some embodiments, the temperature of the pre-heat roll may be varied from 50°C to 30°C below the melting peak temperature of the polymer.

The process described herein provides a bonded sheet of nonwoven flash-spun plexifilamentary fibrils having sufficient surface robustness and strength, while still having high breathability and softness.

In some embodiments after the consolidated sheet is thermally bonded as described herein, the thermally bonded sheet is then subjected to a mechanical softening process to obtain a softened sheet of nonwoven flash-spun plexifilamentary fibrils. During the mechanical softening process described herein, the thermally bonded sheet is passed through a nip of two rolls which are driven at substantially the same speed as the speed of the thermally bonded sheet as it passes through the rolls. This is in contrast to some prior art softening processes where the thermally bonded sheet is passed over a sequence of rolls that are driven at a different speed than the speed of the thermally bonded sheet. This difference in speed creates a rubbing effect that leads to loose fibrils, which can jeopardizes the barrier properties of the softened sheet.

In some embodiments, the thermally bonded sheet is mechanically softened by passing it through a nip of two rolls, each rotating in the opposite direction as the other roll and each bearing a multiplicity of interpenetrating pins. The pins of each roll may be arranged in an array and have ends that are equidistant from the roll's axis. The array of pins on one roll interpenetrates the array of pins on the opposite roll by an amount that is at least equal to the thickness of the sheet. Various geometric configurations may be used for the interpenetrating pins, including, but not limited to, blunt pins, meaning a pin that includes at least a distal end that has a blunt surface and a shaft that has a surface. A blunt surface, i.e., a surface not having a sharp point, includes, but is not limited to, a blunt surface that is rounded, forming a smooth curving surface, or a blunt surface that is flat.

In some embodiments the thermally bonded sheet is subjected to a mechanical softening process as described in US 3,408,709. In some embodiments the thermally bonded sheet is subjected to a mechanical softening process as described in US 5,966,785 and US 6,195,854. In some embodiments the thermally bonded sheet is subjected to a mechanical softening process as described in US 3,920,874 and US 3,811,979.

In some embodiments, an antistatic treatment is applied to the thermally bonded sheet or the bonded and softened sheet. Antistatic treatment improves electrostatic properties of a textile, in particular surface resistivity. In some embodiments, the antistatic treatment is applied by applying a coating composition comprising an antistatic compound. In some embodiments, the antistatic compound is a phosphate ester, in particular a phosphate ester defined by the formula: $M_n R_{3-n} PO_4$, where M is selected from the group consisting of lithium, sodium, potassium, and ammonium ions, R represents an alkyl group containing 3 to 5 carbon atoms, and n is selected from the integers 1 and 2. In some embodiments, the antistatic compound is selected from potassium di-n-propyl phosphate, dipotassium n-propyl phosphate, potassium di-i-propyl phosphate, dipotassium i-propyl phosphate, potassium di-n-butyl phosphate, dipotassium n-butyl phosphate, potassium di-i-butyl phosphate, dipotassium i-butyl phosphate, and combinations thereof.

In some embodiments, there is provided a sheet of nonwoven flash-spun plexifilamentary fibrils obtained or obtainable by the process described herein.

In some embodiments, the obtained sheet has

(a) a basis weight from 32 g/m$^2$ to 56 g/m$^2$,
(b) a having a total crystallinity index of 76% or less,
(c) a delamination strength from 0.15 N to 0.8 N,
(d) a surface robustness with a pass rate of at least 80%, and
(e) a handle-o-meter stiffness from 0.05 N to 1.0 N.

## Uses, Multilayer Structures, and Articles

The sheet of nonwoven flash-spun plexifilamentary fibrils as described herein has many uses and may be used in a variety of applications, including, but not limited to, multilayer structures, garments (including, but not limited to, protective apparel), and medical wraps.

Further embodiments relate to a multilayer structure comprising at least one sheet of nonwoven flash-spun plexifilamentary fibrils as described herein, and at least one further sheet or a film.

In some embodiments, the multilayer structure comprises a film that is a microporous film. In one embodiment, the microporous film is a film that is filled and stretched as described in US 9,809,004 B2. Microporous films from highly filled polymers, usually polyolefins, may be prepared by any methods known in the art. Typically, a combination of a polyolefin, usually a polyethylene, is compounded with a filler, usually calcium carbonate, and extruded and stretched into a film to form a microporous film. Suitable examples of microporous films include those described in U.S. Pat. Nos. 4,472,328, 4,350,655 and 4,777,073. A multilayer structure comprising a microporous film and at least one sheet of nonwoven flash-spun plexifilamentary fibrils as described herein can be used in a variety of applications, including but not limited to protective apparel.

In some embodiments, the multilayer structure is a laminated structure comprising a microporous film laminated to at least one sheet of nonwoven flash-spun plexifilamentary fibrils as described herein. In some embodiments, a microporous film and a sheet of nonwoven flash-spun plexifilamentary fibrils may be laminated using an adhesive layer situated in contact with a least a portion of both the microporous film and the sheet of nonwoven flash-spun plexifilamentary fibrils, as described in US 9,809,004 B2.

Further embodiments relate to use of the sheet of nonwoven flash-spun plexifilamentary fibrils as described herein for preparing a multilayer structure.

Further embodiments relate to use of the sheet of nonwoven flash-spun plexifilamentary fibrils as described herein for the production of garments or medical wraps.

Further embodiments relate to use of the multilayer structure as described herein for the production of garments or medical wraps.

Further embodiments relate to an article comprising at least one sheet of nonwoven flash-spun plexifilamentary fibrils as described herein or comprising at least one multilayer structure as described herein. In some embodiments, the article is selected from garments, protective apparel, and medical wraps. Protective apparel includes full body protective clothing and partial body protective clothing (including, but not limited to, gowns, overalls, coveralls, trousers, smocks, coats, sleeves, hoods, shoe protectors, aprons, etc.) and other garments whose purpose is to protect the wearer against exposure to hazardous materials in the environment, or to protect the wearer's environment against being contaminated by the wearer. In some embodiments, the article is a medical packaging, including, but not limited to, medical wraps for the packaging of medical items such as surgical instruments during sterilization.

## EXAMPLES

Different bonded sheets of nonwoven flash-spun plexifilamentary fibrils have been prepared. The experimental procedure and results are provided below. These examples are given to illustrate exemplary embodiments of the invention and should not be interpreted as limiting in any way.

## Materials Used

Trichlorofluoromethane (Freon 11), CAS Nr. 75-69-4 has an atmospheric boiling point of 23.8°C, a molecular weight of 248 g/mol and a critical point of 198°C. The trichlorofluoromethane used had a purity level above 99.5 percent by weight.

N-pentane, CAS Nr 109-66-0, has an atmospheric boiling point of 36.1°C, a molecular weight of 72.151 g/mol and a critical temperature of 196.7°C. The n-pentane used had a purity level above 95 percent by weight.

Cyclopentane, CAS Nr 287-92-3, has an atmospheric boiling point of 49.2°C, a molecular weight of 70.13 g/mol and a critical temperature of 238.6°C. The cyclopentane used had purity level above 95 percent by weight.

Dichloromethane, CAS Nr. 75-09-2, has an atmospheric boiling of 39.6°C, a molecular weight of 84.93 g/mol and a critical temperature of 236.68°C. The dichloromethane used had a purity level above 99.5 percent by weight.

2H,3H-decafluoropentane (HFC-4310-mee), CAS Nr. 138495-42-8, has an atmospheric boiling point of 55°C, a molecular weight of 252.05 g/mol and a critical temperature of 181°C. The 2H,3H-decafluoropentane used had a purity level above 99.5 percent by weight.

The polyethylene used had a density of 0.957 g/cm$^3$ (ISO 1183), melt flow rates of 0.3 g/10min (ISO 1133 condition D, 190°C/2.16 kg) and 22 g/10min (ISO 1133 condition G, 190°C/21.6 kg), and a melting peak temperature of 133°C to 134°C.

The flash-spun sheets in the examples are produced using the flash spinning process described by US 3,227,794 and US 3,851,023. US 3,227,794 describes a flash spinning process where the pressure is reduced below the cloud point of the spin fluid before it is released into a zone of substantially lower temperature and pressure such that the spin agent flash evaporates and the polymer solidifies in the form of plexifilamentary fibrils. The cloud point pressure for spin agents which are mixtures of trans-1,2-DCE and DCM with fluorinated compounds is reported in, but not limited to, US 6,004,672, US 7,300,968, and US 7,179,413.

## Results

## Comparative examples 1 to 3

The sheets of comparative examples CE1, CE2, and CE3 are all commercially available sheets which had been subjected to a thermal bonding on a smooth heated roll where one or both sides of the sheet were subjected to generally uniform, full surface contact thermal bonding as described in US 3,442,740.

The sheet properties of comparative examples 1 to 3 are reported in Table 1, below.

**Table 1: Summary of the sheet properties of Comparative Examples 1 to 3.**

| Example | CE1 | CE2 | CE3 |
|---|---|---|---|
| Basis weight (g/m$^2$) | 44.0 | 68.3 | 54.3 |
| Average delamination strength (N) | 1.03 | 0.73 | 0.80 |
| Surface robustness (%pass) | 58 | 42 | 17 |
| Total crystallinity index% | 81.3 | 78.9 | 77.7 |

17

(continued)

| Example | CE1 | CE2 | CE3 |
|---|---|---|---|
| Crystallinity index orthorhombic % | 81.3 | 78.9 | 77.7 |
| Crystallinity index monoclinic % | - | - | - |

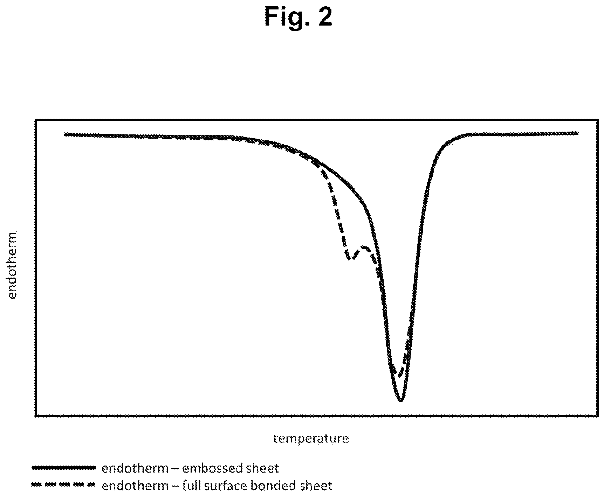

As illustrated by the dashed line in the DSC (differential scanning calorimetry) curve shown in Fig. 2, such full surface area bonded sheets typically have two distinct endotherm peaks. The full surface bonding area represents a period of extended heat and this allows for a softening of the polymer. The prolonged period of the thermal exposure is reflected by a high crystallinity index of about 78% or above. This, and the relatively high delamination strength, are indicative of a high degree of bonding. However, the sheets of comparative example CE1 to CE3 have a low pass rate in the surface robustness test making them less suitable in protective apparel applications where the wearer may come in contact with rough or sticky surfaces which can pull on the nonwoven sheet and damage it. The sheets are also not suitable for medical wraps which are often held closed using tapes which can pull fibrils out of the surface when they are peeled off.

**Comparative examples 4 and 5**

A flash-spun sheet was produced using the flash spinning process described by US 3,227,794 and US 3,851,023 at a spin temperature of 180°C using a spin fluid of 12 wt% polyethylene with a density >0.95 g/cm$^3$ and a melt flow rate of 0.74 g/10min (ASTM 1238 190°C/2.16 kg) in a spin agent of F11 (trichlorofluoromethane).
The flash-spun sheet was subsequently thermally bonded. For comparative example 4, one side was thermally bonded by passing the sheet through a nip formed between a heated roll with a smooth surface and a rubber roll.
For comparative example 5, one side was thermally bonded by passing the sheet through a nip formed between a heated roll with a linen pattern and a rubber roll.
The spinning and bonding conditions as well as the sheet properties are reported in Table 2 below.

**Table 2: Summary of the sheet preparation and sheet properties of Comparative Examples 4 and 5.**

| Example | CE4 | CE5 |
|---|---|---|
| Spin agent | F | F |
| Spin temperature (°C) | 180 | 180 |
| Polymer conc. (wt%) | 12 | 12 |
| Spin pressure (bar) | 56 | 56 |
| BET surface of consolidated sheet (m$^2$/g) | >20 | >20 |
| Pre-heat | none | none |
| Embosser 1 | none (smooth) | linen |
| Rubber hardness (Shore A) | 62 | 62 |
| Wrap angle Embosser 1 (°) | 45 | 45 |
| Nip pressure (kPa) | 605 | 605 |
| Nip pressure application time (ms) | 15.78 | 15.78 |
| Ratio T** | 8.51 | 8.51 |
| Embosser 2 | rib | rib |
| Rubber hardness (Shore A) | 62 | 62 |
| Wrap angle Embosser 2 (°) | 50 | 50 |
| Softening pin interpenetration | n.a.* | n.a.* |
| Basis weight (g/m$^2$) | 41.6 | 42.0 |
| Delamination strength (N) | 0.96 | 0.52 |
| Average Trapezoidal tear strength (N) | 16.3 | 19.1 |
| Surface robustness (%pass) | 67 | 0 |

(continued)

| Example | CE4 | CE5 |
|---|---|---|
| Gurley (s) | 116 | 151 |
| MVTR (g/m$^2$/day) | 2021 | 1688 |
| Hydrostatic head (cmH$_2$O) | 156.0 | 141.5 |
| Handle-o-meter (qf) | 72.37 | 58.44 |
| Handle-o-meter (mN) | 0.71 | 0.57 |
| BET surface area of bonded sheet (m$^2$/g) | 5.95 | 13.66 |
| Total crystallinity index% | 69.9 | n.m. |
| Crystallinity index orthorhombic % | 69.9 | n.m. |
| Crystallinity index monoclinic % | - | n.m. |
| * not applicable<br>** Ratio T is the ratio of the time for a wrap of the consolidated sheet on the embosser to the time of the consolidated sheet in the nip of the embosser | | |

Comparative examples 4 and 5 show that when using F11 (trichlorofluoromethane) as the spin agent, the BET surface area of the consolidated sheet (i.e., before thermal bonding) is remarkably high, which is indicative of the presence of cohesive fibers before bonding. The bonded sheets of comparative examples 4 and 5 had a high Gurley Hill porosity and only a moderate MVTR making them uncomfortable for the wearer in garment applications.

**Comparative Example CE6 and Examples E1 to E5**

A flash-spun sheet was produced using the flash-spinning process described by US 3,227,794 and US 3,851,023 at a spin temperature of 210°C, using a spin fluid of 10 wt% or 11 wt% polyethylene having a density >0.95 g/cm$^3$ and a melt flow rate of 0.74 g/10min (ISO 1133 190°C/2.16 kg) in a spin agent that was a mixture of dichloromethane and 2H,3H-decafluoropentane (herein also referred to as "D").

The sheets of all examples and the comparative example were thermally bonded using a process as described in US 2003/0165667. The flash-spun sheets of Example E5 was first pre-heated by two chrome plate pre-heat rolls set at 100°C before subsequently being thermally bonded. The consolidated sheets were embossed on one side with a linen pattern and on the other side with a rib pattern. The sheets were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 3 below.

**Table 3: Summary of the sheet preparation and sheet properties of Comparative Example CE6 and Examples E1 to E5.**

| Example | CE6 | E1 | E2 | E3 | E4 | E5 |
|---|---|---|---|---|---|---|
| Spin agent | D | D | D | D | D | D |
| Spin temperature (°C) | 210 | 210 | 210 | 210 | 210 | 210 |
| Polymer conc. (wt%) | 11 | 10 | 10 | 11 | 10 | 10 |
| Spin pressure (bar) | 110 | 110 | 110 | 109.5 | 109 | 103.5 |
| BET surface of consolidated sheet (m$^2$/g) | 8.3 | 7.38 | 7.38 | n.m. | n.m. | 7.79 |
| Pre-heat | none | none | none | none | none | yes |
| Embosser 1 | linen | linen | linen | linen | linen | linen |
| Rubber hardness (Shore A) | 70 | 70 | 70 | 50 | 50 | 60 |
| Wrap angle Embosser 1 (°) | 45 | 45 | 45 | 45 | 45 | 45 |
| Nip pressure (kPa) | 418 | 747 | 747 | 322 | 322 | 467 |

(continued)

| Example | CE6 | E1 | E2 | E3 | E4 | E5 |
|---|---|---|---|---|---|---|
| Nip pressure application time (ms) | 7.89 | 12.00 | 12.00 | 14.71 | 13.41 | 14.25 |
| Ratio T* | 8.48 | 5.58 | 5.58 | 5.58 | 5.58 | 5.58 |
| Embosser 2 | rib | rib | rib | rib | rib | rib |
| Rubber hardness (Shore A) | 70 | 70 | 70 | 70 | 70 | 70 |
| Wrap angle Embosser 2 (°) | 85 | 85 | 85 | 85 | 85 | 85 |
| Softening pin interpenetration (mm) | 1.2 | 1.2 | 1.2 | 1.2 | 1.2 | 1.6 |
| Basis weight (g/m$^2$) | 44.52 | 45.92 | 43.67 | 46.23 | 43.93 | 38.87 |
| Delamination strength (N) | 0.51 | 0.27 | 0.52 | 0.43 | 0.41 | 0.67 |
| Average Trapezoidal tear strength (N) | 26.20 | 25.90 | 25.57 | 21.25 | 24.07 | 14.90 |
| Surface robustness (%pass) | 58.3 | 83.3 | 100.0 | 100.0 | 91.7 | 100.0 |
| Gurley (s) | 5.0 | 11.7 | 16.8 | 13.8 | 6.9 | 13.3 |
| MVTR (g/m$^2$/day) | 11905 | 9154 | 8455 | 7473 | 9842 | 8707 |
| Hydrostatic head (cmH$_2$O) | 209.7 | 135.7 | 145.7 | 166.2 | 136.3 | 154.2 |
| Handle-o-meter (qf) | 18.82 | 22.24 | 31.37 | 31.24 | 24.45 | 29.37 |
| Handle-o-meter (mN) | 0.18 | 0.22 | 0.31 | 0.31 | 0.24 | 0.29 |
| BET surface area (m$^2$/g) | n.m. | 4.25 | 5.15 | 5.19 | 4.99 | 2.96 |
| Total crystallinity index% | 67.2 | 68.5 | 68.0 | 71.1 | 72.3 | 75.1 |
| Crystallinity index orthorhombic % | 66.1 | 67.6 | 67.2 | 71.1 | 72.3 | 75.1 |
| Crystallinity index monoclinic % | 1.2 | 0.9 | 0.8 | [-] | [-] | [-] |
| * Ratio T is the ratio of the time for a wrap of the consolidated sheet on the embosser to the time of the consolidated sheet in the nip of the embosser | | | | | | |

Examples 1 to 5 illustrate that a beneficial combination of properties can be obtained when using a chlorine-containing solvent as spin-agent compared to F11 (trichlorofluoromethane) as used in Comparative examples 4 and 5. Surprisingly, even though the consolidated sheets of Examples 1 to 5 comprised non-cohesive fibers before bonding (as reflected by the significantly lower BET surface compared to Comparative examples 4 and 5), examples E1 to E5 showed a higher level of air permeability (low Gurley Hill porosity) combined with a high liquid barrier (i.e., a hydrostatic head of above 130 cmH$_2$O) and a high MVTR. In addition, Examples 1 to 5 are significantly softer compared to Comparative examples 4 to 5 as reflected by lower handle-o-meter values, resulting in less noise formation in use. Finally, the sheets of examples 1 to 5 exhibit a very high surface robustness (pass rate of above 80%) while maintaining a high lamination strength. The sheets of examples 1 to 5 also exhibit higher surface robustness than the sheets of comparative example 6 where the residence time in the nip of the embosser was below 10 ms.

Finally, as illustrated by the solid line in Fig. 2, the DSC curve of a sheet of an example which was bonded by embossing as described herein exhibits a single peak in the endotherm - in contrast to a sheet which had been subjected to full surface area bonding as in Comparative Examples CE1 to CE3. Additionally, the crystallinity index is lower (i.e., below 76%).

**Comparative Examples CE7 and CE8 and Examples E6 to E9**

A flash-spun sheet was produced using the flash-spinning process described by US 3,227,794 and US 3,851,023 at different spin temperatures, using a spin fluid of 11 wt% polyethylene having a density >0.95 g/cm$^3$ and a melt flow rate of 0.74 g/10min (ISO 1133 190°C/2.16 kg) in a spin agent that was a mixture of dichloromethane and 2H,3H-decafluoropentane (herein also referred to as "D").

The sheets of all examples and comparative examples were thermally bonded using a process as described in US 2003/0165667. The consolidated sheets were embossed on one side with a linen pattern and on the other side with a rib pattern. The sheets were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 4, below.

**Table 4: Summary of the sheet preparation and sheet properties of Comparative Examples CE7 and CE8 and Examples E6 to E9.**

| Example | CE7 | E6 | E7 | CE8 | E8 | E9 |
|---|---|---|---|---|---|---|
| Spin agent | D | D | D | D | D | D |
| Spin temperature (°C) | 205 | 205 | 205 | 210 | 210 | 210 |
| Polymer conc. (wt%) | 11 | 11 | 11 | 11 | 11 | 11 |
| Spin pressure (bar) | 103 | 103 | 103 | 109.5 | 109.5 | 109.5 |
| BET surface of consolidated sheet ($m^2$/g) | 8.96 | 8.96 | 8.96 | n.m | n.m | n.m |
| Pre-heat | none | none | none | none | none | none |
| Embosser 1 | linen | linen | linen | linen | linen | linen |
| Rubber hardness (Shore A) | 50 | 50 | 50 | 50 | 50 | 50 |
| Wrap angle Embosser 1 (°) | 60 | 60 | 70 | 11 | 67 | 75 |
| Nip pressure (kPa) | 187 | 234 | 322 | 187 | 322 | 322 |
| Nip pressure application time (ms) | 8.57 | 10.29 | 13.03 | 6.82 | 14.71 | 10.86 |
| Ratio T* | 11.31 | 9.42 | 8.68 | 2.07 | 8.31 | 9.30 |
| Embosser 2 | rib | rib | rib | rib | rib | rib |
| Rubber hardness (Shore A) | 70 | 70 | 70 | 70 | 70 | 70 |
| Wrap angle Embosser 2 (°) | 35 | 35 | 35 | 105 | 105 | 105 |
| Softening pin interpenetration (mm) | 1.2 | 1.2 | 1.2 | 1.2 | 1.2 | 1.2 |
| Basis weight (g/$m^2$) | 33.36 | 33.79 | 32.56 | 59.83 | 54.20 | 55.59 |
| Delamination strength (N) | 0.38 | 0.49 | 0.62 | 0.33 | 0.22 | 0.24 |
| Average Trapezoidal tear strength (N) | 18.51 | 17.22 | 13.58 | 28.55 | 28.38 | 31.13 |
| Surface robustness (%pass) | 41.7 | 91.7 | 100.0 | 0.0 | 100.0 | 91.7 |
| Gurley (s) | 6.2 | 8.3 | 16.0 | 37.6 | 20.3 | 16.2 |
| MVTR (g/$m^2$/day) | 9763 | 10281 | 8042 | 4748 | 6038 | 6220 |
| Hydrostatic head (cm$H_2$O) | 133.1 | 139.2 | 163.6 | 197.0 | 175.2 | 165.0 |
| Handle-o-meter (gf) | 15.66 | 18.55 | 28.16 | 39.23 | 42.71 | 30.65 |
| Handle-o-meter (mN) | 0.15 | 0.18 | 0.28 | 0.38 | 0.42 | 0.30 |
| BET surface area ($m^2$/g) | 6.33 | 5.00 | n.m. | 7.56 | 5.31 | 6.74 |
| Total crystallinity index% | n.m. | 69.0 | n.m. | n.m. | n.m. | n.m. |
| Crystallinity index orthorhombic % | n.m. | 69.0 | n.m. | n.m. | n.m. | n.m. |
| Crystallinity index monoclinic % | n.m. | [-] | n.m. | n.m. | n.m. | n.m. |

\* Ratio T is the ratio of the time for a wrap of the consolidated sheet on the embosser to the time of the consolidated sheet in the nip of the embosser

Examples 6 to 9 illustrate for sheets having different basis weights - about 32 to 34 g/$m^2$ in Examples 6 and 7 and about 54 to 56 g/$m^2$ in Examples 8 and 9 - that a beneficial combination of properties can be obtained when using a chlorine-containing solvent as spin-agent compared to F11 (trichlorofluoromethane) as used in Comparative examples 4 and 5. Surprisingly, even though the consolidated sheets of Examples 6 to 9 comprised non-cohesive fibers before bonding (as reflected by the significantly lower BET surface compared to Comparative examples 4 and 5), examples E6 to E9 showed a higher level of air permeability (low Gurley Hill porosity) combined with a high liquid barrier (i.e., a hydrostatic head of above 130 cmH$_2$O) and a high MVTR. In addition, Examples 6 to 9 are significantly softer compared to Comparative examples 4 to 5 as reflected by lower handle-o-meter values, resulting in less noise formation in use. Finally, the sheets of examples 6 to 9 exhibit a very high surface robustness (pass rate of above 90%) while maintaining a high delamination strength. The sheets of examples 6 to 9 also exhibit, for similar basis weights, higher surface robustness than the sheets of Comparative examples CE7 and CE8 where the residence time in the nip of the embosser was below 10 ms.

**Examples E10 to E12**

A flash-spun sheet was produced using the flash-spinning process described by US 3,227,794 and US 3,851,023 at a spin temperature of 200°C, using a spin fluid of 15.1 wt% or 16 wt% polyethylene having a density >0.95 g/cm$^3$ and a melt flow rate of 0.74 g/10min (ISO 1133 190°C/2.16 kg) in a hydrocarbon-based spin agent that was a mixture of n-pentane and cyclopentane (herein also referred to as "H").

The sheets of all examples were thermally bonded using a process as described in US 2003/0165667. The consolidated sheets were embossed on one side with a linen pattern and on the other side with a rib pattern. The sheets were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 5, below.

**Table 5: Summary of the sheet preparation and sheet properties of Examples E10 to E12.**

| Example | E10 | E11 | E12 |
|---|---|---|---|
| Spin agent | H | H | H |
| Spin temperature (°C) | 200 | 200 | 200 |
| Polymer conc. (wt%) | 16 | 16 | 15.1 |
| Spin pressure (bar) | 104.5 | 104.5 | 105.5 |
| BET surface of consolidated sheet (m$^2$/g) | 13.2 | 13.2 | 13.3 |
| Pre-heat | none | none | none |
| Embosser 1 | linen | linen | linen |
| Rubber hardness (Shore A) | 70 | 70 | 70 |
| Wrap angle Embosser 1 (°) | 45 | 37 | 37 |
| Nip pressure (kPa) | 834 | 654 | 834 |
| Nip pressure application time (ms) | 10.50 | 11.66 | 13.26 |
| Ratio T* | 5.05 | 5.13 | 4.15 |
| Embosser 2 | rib | rib | rib |
| Rubber hardness (Shore A) | 70 | 70 | 70 |
| Wrap angle Embosser 2 (°) | 85 | 85 | 85 |
| Softening pin interpenetration (mm) | 1.2 | 1.2 | 1.2 |
| Basis weight (g/m$^2$) | 43.10 | 41.82 | 46.92 |
| Delamination strength (N) | 0.42 | 0.62 | 0.52 |
| Average Trapezoidal tear strength (N) | 15.01 | 14.76 | 16.25 |
| Surface robustness (%pass) | 91.7 | 100.0 | 91.7 |
| Gurley (s) | 14.8 | 19.1 | 12.9 |
| MVTR (g/m$^2$/day) | 12666 | 9474 | 13028 |
| Hydrostatic head (cmH$_2$O) | 151.0 | 170.7 | 159.7 |
| Handle-o-meter (qf) | 24.40 | 42.03 | 30.11 |
| Handle-o-meter (mN) | 0.24 | 0.41 | 0.30 |

(continued)

| Example | E10 | E11 | E12 |
|---|---|---|---|
| BET surface area (m²/g) | 6.52 | 6.90 | 5.73 |
| Total crystallinity index% | 70.4 | 73.7 | 71.2 |
| Crystallinity index orthorhombic % | 69.4 | 73.7 | 70.2 |
| Crystallinity index monoclinic % | 1.0 | [-] | 1.0 |

* Ratio T is the ratio of the time for a wrap of the consolidated sheet on the embosser to the time of the consolidated sheet in the nip of the embosser

Examples 10 to 12 illustrate that a beneficial combination of properties can also be obtained when using a hydrocarbon-based spin agent as spin-agent compared to F11 (trichlorofluoromethane) as used in Comparative examples 4 and 5. Surprisingly, even though the consolidated sheets of Examples 10 to 12 comprised non-cohesive fibers before bonding (as reflected by the significantly lower BET surface compared to Comparative examples 4 and 5), examples 10 to 12 showed a higher level of air permeability (low Gurley Hill porosity) combined with a high liquid barrier (i.e., a hydrostatic head of above 150 cmH$_2$O) and a high MVTR. In addition, Examples 10 to 12 are significantly softer compared to Comparative examples 4 to 5 as reflected by lower handle-o-meter values, resulting in less noise formation in use. Finally, the sheets of examples 10 to 12 exhibit a very high surface robustness (pass rate of above 90%) while maintaining a high lamination strength.

## Claims

1. A thermally bonded sheet of nonwoven flash-spun plexifilamentary fibrils, the sheet having

   (a) a basis weight from 32 g/m² to 56 g/m²,
   (b) a total crystallinity index of 76% or less, measured according to the method described herein,
   (c) a delamination strength from 0.15 N to 0.8 N, measured according to the method described herein,
   (d) a surface robustness with a pass rate of at least 80%, measured according to the method described herein, and
   (e) a handle-o-meter stiffness from 0.05 N to 1.0 N measured according to the method described herein.

2. The sheet of claim 1 having a BET surface area from 2.5 m²/g to 8 m²/g, measured according to the method described herein, or having a Gurley Hill porosity from 3 seconds to 30 seconds, measured according to the method described herein.

3. The sheet of any one of claims 1 to 2 having a moisture vapor transmission rate from 6000 g/m²/day to 16,000 g/m²/day, measured according to the method described herein.

4. The sheet of any one of claims 1 to 3, wherein the flash-spun plexifilamentary fibrils are comprised of a polyolefin, selected from the group of polyethylene (PE), polypropylene (PP), and blends/mixtures thereof, or wherein the flash-spun plexifilamentary fibrils are comprised of a polyolefin which is a high-density polyethylene, a blend of a high-density polyethylene (HDPE) with a linear low-density polyethylene (LLDPE), or a blend of a high-density polyethylene (HDPE) with a low-density polyethylene (LDPE).

5. A process for the preparation of a sheet of nonwoven flash-spun plexifilamentary fibrils which comprises the steps of:

   (i) generating a spin fluid comprising

   (a) from 8.0 to 11.5 weight percent of a polymer, based on the total amount of the spin fluid, and
   (b) a spin agent comprising a chlorine-containing solvent, selected from dichloromethane, cis-1,2-dichloroethylene, and trans-1,2-dichloroethylene, in combination with a fluorine-containing solvent,

   (ii) flash spinning the spin fluid at a temperature at or above 205°C and at a pressure that is above the vapor pressure of the spin fluid into a region of essentially atmospheric pressure to form plexifilamentary fibrils of the polymer,

(iii) collecting the plexifilamentary fibrils of the polymer on a collecting means as a sheet of nonwoven flash-spun plexifilamentary fibrils and applying pressure to the sheet to obtain a consolidated sheet, and

(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

6. A process for the preparation of a sheet of nonwoven flash-spun plexifilamentary fibrils which comprises the steps of:

(i) generating a spin fluid comprising

(a) from 14 to 19 weight percent of a polymer, based on the total amount of the spin fluid, and
(b) a spin agent comprising one or more hydrocarbons,

(ii) flash spinning the spin fluid at a temperature at or above 195°C and at a pressure that is above the vapor pressure of the spin fluid into a region of essentially atmospheric pressure to form plexifilamentary fibrils of the polymer,

(iii) collecting the plexifilamentary fibrils of the polymer on a collecting means as a sheet of nonwoven flash-spun plexifilamentary fibrils and applying pressure to the sheet to obtain a consolidated sheet, and

(iv) thermally bonding by embossing the consolidated sheet on one or both sides of the consolidated sheet to obtain a bonded sheet, wherein one side of the consolidated sheet is thermally bonded by passing through a nip of two rolls of an embosser comprising an embossing roll engraved with a linen pattern and a rubber coated back-up roll, wherein the static pressure in the nip of the embosser is between 150 kPa and 900 kPa and wherein said pressure is applied for 10 ms to 20 ms.

7. The process of claim 5 or 6, wherein the rubber coated back-up roll has a Shore A hardness of 50 to 70.

8. The process of any one of claims 5 to 7, wherein the process further comprises mechanically softening the bonded sheet, or wherein the consolidated sheet is embossed on the other side using a point pattern, a rib pattern, or a random pattern.

9. The process of any one of claims 5 to 8, wherein the polymer is a polyolefin, selected from the group of polyethylene (PE), polypropylene (PP), and blends/mixtures thereof, or wherein the polyolefin is a high-density polyethylene (HDPE), a blend of a high-density polyethylene (HDPE) with a linear low-density polyethylene (LLDPE), or a blend of a high-density polyethylene (HDPE) with a low-density polyethylene (LDPE).

10. The process of any one of claims 5 and 7 to 9, wherein the flash-spinning is carried out at a temperature from 205°C to 220 °C.

11. The process of any one of claims 6 to 9, wherein the flash-spinning is carried out at a temperature from 195°C to 210 °C.

12. A multilayer structure comprising at least one sheet according to any one of claims 1 to 4 and at least one further sheet or film.

13. Use of a sheet of any one of claims 1 to 4 for preparing a multilayer structure.

14. Use of a sheet of any one of claims 1 to 4 or of the multilayer structure of claim 12 for the production of garments or medical wraps.

15. An article comprising a sheet of any one of claims 1 to 4 or a multilayer structure of claim 12, preferably wherein the article is selected from garments, protective apparel, or medical wraps.

**Patentansprüche**

1. Thermisch gebundene Folie aus nichtgewebten, flash-gesponnenen plexifilamentären Fibrillen, die Folie aufweisend

(a) ein Flächengewicht von 32 g/m$^2$ bis 56 g/m$^2$,
(b) einen Gesamtkristallinitätsindex von 76 % oder weniger, gemessen gemäß dem hierin beschriebenen Verfahren,
(c) eine Delaminierungsfestigkeit von 0,15 N bis 0,8 N, gemessen gemäß dem hierin beschriebenen Verfahren,
(d) eine Oberflächenrobustheit mit einer Erfolgsquote von mindestens 80 %, gemessen gemäß dem hierin beschriebenen Verfahren, und
(e) eine Handle-O-Meter-Steifigkeit von 0,05 N bis 1,0 N, gemessen gemäß dem hierin beschriebenen Verfahren.

2. Folie nach Anspruch 1, aufweisend einen BET-Oberflächenbereich von 2,5 m$^2$/g bis 8 m$^2$/g, gemessen gemäß dem hierin beschriebenen Verfahren, oder aufweisend eine Gurley-Hill-Porosität von 3 Sekunden bis 30 Sekunden, gemessen gemäß dem hierin beschriebenen Verfahren.

3. Folie nach einem der Ansprüche 1 bis 2, aufweisend eine Wasserdampfübertragungsgeschwindigkeit von 6000 g/m$^2$/Tag bis 16.000 g/m$^2$/Tag, gemessen gemäß dem hierin beschriebenen Verfahren.

4. Folie nach einem der Ansprüche 1 bis 3, wobei die flash-gesponnenen plexifilamentären Fibrillen ein Polyolefin umfassen, ausgewählt aus Polyethylen (PE), Polypropylen (PP) und Mischungen/Gemischen davon, oder wobei die flash-gesponnenen plexifilamentären Fibrillen ein Polyolefin umfassen, das ein Polyethylen hoher Dichte, eine Mischung aus einem Polyethylen hoher Dichte (HDPE) mit einem linearen Polyethylen niedriger Dichte (LLDPE) oder eine Mischung aus einem Polyethylen hoher Dichte (HDPE) mit einem Polyethylen niedriger Dichte (LDPE) ist.

5. Prozess zur Herstellung einer Folie aus nichtgewebten, flash-gesponnenen plexifilamentären Fibrillen, der die Schritte umfasst von:

   (i) Erzeugen eines Spinnfluids, umfassend

      (a) von 8,0 bis 11,5 Gewichtsprozent eines Polymers, bezogen auf die Gesamtmenge des Spinnfluids, und
      (b) ein Spinnmittel, umfassend ein chlorhaltiges Lösungsmittel, ausgewählt aus Dichlormethan, cis-1,2-Dichlorethylen und trans-1,2-Dichlorethylen, in Kombination mit einem fluorhaltigen Lösungsmittel,

   (ii) Flash-Spinnen des Spinnfluids bei einer Temperatur bei oder über 205 °C und bei einem Druck, der über dem Dampfdruck des Spinnfluids liegt, in eine Region mit im Wesentlichen atmosphärischem Druck, um plexifilamentäre Fibrillen des Polymers zu bilden,
   (iii) Sammeln der plexifilamentären Fibrillen des Polymers auf einem Sammelmittel als eine Folie aus nichtgewebten, flash-gesponnenen plexifilamentären Fibrillen und Anwenden von Druck auf die Folie, um eine konsolidierte Folie zu erhalten, und
   (iv) thermisches Binden durch Prägen der konsolidierten Folie auf einer oder beiden Seiten, um eine gebundene Folie zu erhalten, wobei eine Seite der konsolidierten Folie thermisch gebunden wird, indem sie durch einen Spalt aus zwei Walzen einer Prägemaschine durchgeht, die eine mit einem Leinenmuster gravierte Prägewalze und eine gummibeschichtete Gegenwalze umfasst, wobei der statische Druck im Walzspalt der Prägemaschine zwischen 150 kPa und 900 kPa liegt und wobei dieser Druck für 10 ms bis 20 ms angewendet wird.

6. Prozess zur Herstellung einer Folie aus nichtgewebten, flash-gesponnenen plexifilamentären Fibrillen, der die Schritte umfasst von:

   (i) Erzeugen eines Spinnfluids, umfassend

      (a) von 14 bis 19 Gewichtsprozent eines Polymers, bezogen auf die Gesamtmenge des Spinnfluids, und
      (b) ein Spinnmittel, umfassend einen oder mehrere Kohlenwasserstoffe,

   (ii) Flash-Spinnen des Spinnfluids bei einer Temperatur bei oder über 195 °C und bei einem Druck, der über dem Dampfdruck des Spinnfluids liegt, in eine Region mit im Wesentlichen atmosphärischem Druck, um plexifilamentäre Fibrillen des Polymers zu bilden,
   (iii) Sammeln der plexifilamentären Fibrillen des Polymers auf einem Sammelmittel als eine Folie aus nichtgewebten, flash-gesponnenen plexifilamentären Fibrillen und Anwenden von Druck auf die Folie, um eine konsolidierte Folie zu erhalten, und
   (iv) thermisches Binden durch Prägen der konsolidierten Folie auf einer oder beiden Seiten, um eine gebundene Folie zu erhalten, wobei eine Seite der konsolidierten Folie thermisch gebunden wird, indem sie durch einen Spalt aus zwei Walzen einer Prägemaschine durchgeht, die eine mit einem Leinenmuster gravierte Prägewalze und eine gummibeschichtete Gegenwalze umfasst, wobei der statische Druck im Walzspalt der Prägemaschine zwischen 150 kPa und 900 kPa liegt und wobei dieser Druck für 10 ms bis 20 ms angewendet wird.

7. Prozess nach Anspruch 5 oder 6, wobei die gummibeschichtete Gegenwalze eine Shore-A-Härte von 50 bis 70 aufweist.

8. Prozess nach einem der Ansprüche 5 bis 7, wobei der Prozess weiter das mechanische Aufweichen der gebundenen Folie umfasst oder wobei die konsolidierte Folie auf der anderen Seite mit einem Punktmuster, einem Rippenmuster oder einem zufälligen Muster geprägt wird.

9. Prozess nach einem der Ansprüche 5 bis 8, wobei das Polymer ein Polyolefin ist, ausgewählt aus Polyethylen (PE), Polypropylen (PP) und Mischungen/Gemischen davon, oder wobei das Polyolefin um ein Polyethylen hoher Dichte (HDPE), eine Mischung aus einem Polyethylen hoher Dichte (HDPE) mit einem linearen Polyethylen niedriger Dichte (LLDPE) oder eine Mischung aus einem Polyethylen hoher Dichte (HDPE) mit einem Polyethylen niedriger Dichte (LDPE) ist.

10. Prozess nach einem der Ansprüche 5 und 7 bis 9, wobei das Flash-Spinnen bei einer Temperatur von 205 °C bis 220 °C durchgeführt wird.

11. Prozess nach einem der Ansprüche 6 bis 9, wobei das Flash-Spinnen bei einer Temperatur von 195 °C bis 210 °C ausgeführt wird.

12. Mehrschichtige Struktur, umfassend mindestens eine Folie nach einem der Ansprüche 1 bis 4 und mindestens eine weitere Folie oder einen Film.

13. Verwendung einer Folie nach einem der Ansprüche 1 bis 4 zum Herstellen einer mehrschichtigen Struktur.

14. Verwendung einer Folie nach einem der Ansprüche 1 bis 4 oder der mehrschichtigen Struktur nach Anspruch 12 zur Produktion von Kleidungsstücken oder medizinischen Bandagen.

15. Gegenstand, umfassend eine Folie nach einem der Ansprüche 1 bis 4 oder eine mehrschichtige Struktur nach Anspruch 12, wobei der Gegenstand vorzugsweise aus Kleidungsstücken, Schutzkleidung oder medizinischen Bandagen ausgewählt ist.

**Revendications**

1. Feuille thermoliée de fibrilles plexifilamentaires filées éclair non tissées, la feuille présentant

   (a) un poids de base de 32 g/m$^2$ à 56 g/m$^2$,
   (b) un indice de cristallinité total de 76 % ou moins, mesuré selon le procédé décrit ici,
   (c) une résistance au décollement de 0,15 N à 0,8 N, mesurée selon le procédé décrit ici,
   (d) une robustesse de surface avec un taux de réussite d'au moins 80 %, mesuré selon le procédé décrit ici, et
   (d) une rigidité de poignée de 0,05 N à 1,0 N mesurée selon le procédé décrit ici.

2. Feuille selon la revendication 1 présentant une surface BET de 2,5 m$^2$/g à 8 m$^2$/g, mesurée selon le procédé décrit ici, ou présentant une porosité Gurley Hill de 3 secondes à 30 secondes, mesurée selon le procédé décrit ici.

3. Feuille selon l'une quelconque des revendications 1 ou 2 présentant un taux de transmission de vapeur humide de 6 000 g/m$^2$/jour à 16 000 g/m$^2$/jour, mesuré selon le procédé décrit ici.

4. Feuille selon l'une quelconque des revendications 1 à 3, dans laquelle les fibrilles plexifilamentaires filées éclair sont composées d'une polyoléfine, sélectionnée dans le groupe consistant en polyéthylène (PE), polypropylène (PP) et mélanges/mixtures de ceux-ci, ou dans laquelle les fibrilles plexifilamentaires filées éclair sont composées d'une polyoléfine qui est un polyéthylène haute densité, un mélange de polyéthylène haute densité (HDPE) et de polyéthylène linéaire basse densité (LLDPE), ou un mélange de polyéthylène haute densité (HDPE) et de polyéthylène basse densité (LDPE).

5. Processus de préparation d'une feuille de fibrilles plexifilamentaires filées éclair non tissées qui comprend les étapes de :

(i) génération d'un fluide de filage comprenant

(a) de 8,0 à 11,5 pour cent en poids d'un polymère, sur la base de la quantité totale du fluide de filage, et
(b) un agent de filage comprenant un solvant contenant du chlore, sélectionné parmi le dichlorométhane, le cis-1,2-dichloroéthylène et le trans-1,2-dichloroéthylène, en combinaison avec un solvant contenant du fluor,

(ii) filage éclair du fluide de filage à une température égale ou supérieure à 205 °C et à une pression qui est supérieure à la pression de vapeur du fluide de filage dans une région de pression essentiellement atmosphérique pour former des fibrilles plexifilamentaires du polymère,
(iii) collecte des fibrilles plexifilamentaires du polymère sur un moyen de collecte sous forme de feuille de fibrilles plexifilamentaires filées éclair non tissées et application d'une pression sur la feuille pour obtenir une feuille consolidée, et
(iv) liage thermique par gaufrage de la feuille consolidée sur une ou les deux faces de la feuille consolidée pour obtenir une feuille liée, dans lequel une face de la feuille consolidée est thermoliée en passant à travers un pincement de deux rouleaux d'une gaufreuse comprenant un rouleau de gaufrage gravé d'un motif de lin et un rouleau de support revêtu de caoutchouc, dans lequel la pression statique dans le pincement de la gaufreuse est comprise entre 150 kPa et 900 kPa et dans lequel ladite pression est appliquée pendant 10 ms à 20 ms.

6. Processus de préparation d'une feuille de fibrilles plexifilamentaires filées éclair non tissées qui comprend les étapes de :

(i) génération d'un fluide de filage comprenant

(a) de 14 à 19 pour cent en poids d'un polymère, sur la base de la quantité totale du fluide de filage, et
(b) un agent de filage comprenant un ou plusieurs hydrocarbures,

(ii) filage éclair du fluide de filage à une température égale ou supérieure à 195 °C et à une pression qui est supérieure à la pression de vapeur du fluide de filage dans une région de pression essentiellement atmosphérique pour former des fibrilles plexifilamentaires du polymère,
(iii) collecte des fibrilles plexifilamentaires du polymère sur un moyen de collecte sous forme de feuille de fibrilles plexifilamentaires filées éclair non tissées et application d'une pression sur la feuille pour obtenir une feuille consolidée, et
(iv) liage thermique par gaufrage de la feuille consolidée sur une ou les deux faces de la feuille consolidée pour obtenir une feuille liée, dans lequel une face de la feuille consolidée est thermoliée en passant à travers un pincement de deux rouleaux d'une gaufreuse comprenant un rouleau de gaufrage gravé d'un motif de lin et un rouleau de support revêtu de caoutchouc, dans lequel la pression statique dans le pincement de la gaufreuse est comprise entre 150 kPa et 900 kPa et dans lequel ladite pression est appliquée pendant 10 ms à 20 ms.

7. Processus selon la revendication 5 ou 6, dans lequel le rouleau de support revêtu de caoutchouc présente une dureté Shore A de 50 à 70.

8. Processus selon l'une quelconque des revendications 5 à 7, dans lequel le processus comprend en outre un assouplissement mécanique de la feuille liée, ou dans lequel la feuille consolidée est gaufrée sur l'autre face à l'aide d'un motif de points, d'un motif de nervures ou d'un motif aléatoire.

9. Processus selon l'une quelconque des revendications 5 à 8, dans lequel le polymère est une polyoléfine, sélectionnée dans le groupe consistant en polyéthylène (PE), polypropylène (PP) et mélanges/mixtures de ceux-ci, ou dans lequel la polyoléfine est un polyéthylène haute densité (HDPE), un mélange de polyéthylène haute densité (HDPE) et de polyéthylène linéaire basse densité (LLDPE), ou un mélange de polyéthylène haute densité (HDPE) et de polyéthylène basse densité (LDPE).

10. Processus selon l'une quelconque des revendications 5 et 7 à 9, dans lequel le filage éclair est effectué à une température de 205 °C à 220 °C.

**11.** Processus selon l'une quelconque des revendications 6 à 9, dans lequel le filage éclair est effectué à une température de 195 °C à 210 °C.

**12.** Structure multicouche comprenant au moins une feuille selon l'une quelconque des revendications 1 à 4 et au moins une autre feuille ou un autre film.

**13.** Utilisation d'une feuille selon l'une quelconque des revendications 1 à 4 pour préparer une structure multicouche.

**14.** Utilisation d'une feuille selon l'une quelconque des revendications 1 à 4 ou de la structure multicouche selon la revendication 12 pour la production de vêtements ou d'emballages médicaux.

**15.** Article comprenant une feuille selon l'une quelconque des revendications 1 à 4 ou une structure multicouche selon la revendication 12, de préférence dans lequel l'article est sélectionné parmi des vêtements, des vêtements de protection ou des emballages médicaux.

# Fig. 1

# Fig. 2

temperature

endotherm

———— endotherm – embossed sheet
▬ ▬ ▬ ▬ endotherm – full surface bonded sheet

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3081519 A
- US 3227794 A
- US 3442740 A
- US 3532589 A
- US 5972147 A
- US 3478141 A
- US 4091137 A
- US 6610390 B
- US 2004241399 A1
- US 20030032355 A1
- US 200300165667 A1
- US 7744989 B
- US 5620779 A
- US 5964742 A
- US 6034008 A
- US 3408709 A
- US 5966785 A
- US 6195854 B
- US 7296328 B
- US 3920874 A
- US 3811979 A
- WO 2020026062 A1
- US 3860369 A
- US 3387326 A
- US 3467744 A
- US 5788993 A
- US 8114325 B
- US 3564088 A
- US 3277526 A
- US 3169899 A
- US 3497918 A
- US 3593074 A
- US 3851023 A
- US 4148595 A
- US 5045258 A
- US 5643524 A
- US 5731011 A
- US 5750152 A
- WO 9220511 A1
- US 5123983 A
- US 5296172 A
- US 7118698 B
- US 7621731 B
- US 7786034 B
- US 7998388 B
- US 20030165667 A1
- US 9809004 B2
- US 4472328 A
- US 4350655 A
- US 4777073 A
- US 6004672 A
- US 7300968 B
- US 7179413 B
- US 20030165667 A

### Non-patent literature cited in the description

- **S.L. AGGARWAL** ; **G.P. TILLEY**. Determination of crystallinity in polyethylene by X-Ray diffractometer. *Journal of Polymer Science*, 1955, vol. 18, 17-26
- **S. BRUNAUER** ; **P. H. EMMETT** ; **E. TELLER**. *J. Am. Chem. Soc*, 1938, vol. 60, 309-319
- *CHEMICAL ABSTRACTS*, 75-69-4
- *CHEMICAL ABSTRACTS*, 109-66-0
- *CHEMICAL ABSTRACTS*, 287-92-3
- *CHEMICAL ABSTRACTS*, 75-09-2
- *CHEMICAL ABSTRACTS*, 138495-42-8